(19) Europäisches Patentamt
European Patent Office
Office européen des brevets

(11) **EP 4 364 826 A1**

(12) **EUROPEAN PATENT APPLICATION**
published in accordance with Art. 153(4) EPC

(43) Date of publication:
**08.05.2024 Bulletin 2024/19**

(21) Application number: **22832771.4**

(22) Date of filing: **10.06.2022**

(51) International Patent Classification (IPC):
*B01D 61/00* (2006.01)    *B01D 63/02* (2006.01)
*B01D 69/00* (2006.01)    *B01D 69/08* (2006.01)
*B01D 69/10* (2006.01)    *B01D 69/12* (2006.01)
*B01D 71/68* (2006.01)

(52) Cooperative Patent Classification (CPC):
**B01D 61/00; B01D 63/02; B01D 69/00;**
**B01D 69/08; B01D 69/10; B01D 69/12;**
**B01D 71/68;** Y02A 20/131

(86) International application number:
**PCT/JP2022/023487**

(87) International publication number:
**WO 2023/276614 (05.01.2023 Gazette 2023/01)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.06.2021 JP 2021106835**

(71) Applicant: **Asahi Kasei Kabushiki Kaisha**
**Tokyo 1000006 (JP)**

(72) Inventors:
• **HOTTA, Daisuke**
  **Tokyo 100-0006 (JP)**
• **HASHIMOTO, Tomotaka**
  **Tokyo 100-0006 (JP)**

(74) Representative: **D Young & Co LLP**
**3 Noble Street**
**London EC2V 7BQ (GB)**

(54) **FORWARD OSMOSIS MEMBRANE AND FORWARD OSMOSIS MEMBRANE MODULE INCLUDING SAME**

(57)     A forward osmosis membrane comprising a support membrane and an isolative function layer, wherein: the support membrane is equipped with at least a porous support body; the isolative function layer is provided on the porous support body; the porous support body is provided with a compact layer and a macrovoid layer in this order in the depth direction from the surface thereof which contacts the isolative function layer; the thickness of the compact layer is 1.0-9.5μm; there are 0-0.20 macrovoids/μm in a region A which extends to a depth of 0-5.0μm from the interface between the isolative function layer and the porous support body; and there are 0.04-0.40 macrovoids/μm in a region B which extends to a depth of 5.0-10.0μm from the interface between the isolative function layer and the porous support body.

FIG. 2

**Description**

FIELD

The present invention relates to a forward osmosis membrane and to a forward osmosis membrane module that includes it.

BACKGROUND

Membrane separation techniques for selective separation of liquid mixtures are used in a wide range of fields including seawater desalination, ultrapure water production, waste water treatment and the food industry. Microfiltration membranes, ultrafiltration membranes, nanofiltration membranes and reverse osmosis membranes are well-known types of membranes used for membrane separation. In recent years, however, focus has been increasingly on forward osmosis methods using forward osmosis membranes.

Forward osmosis membranes comprise at least a separation functional layer, and they are capable of high-density concentration that cannot be achieved with reverse osmosis membranes.

When a feed solution and a draw solution that has higher osmotic pressure than the feed solution are contacted across a forward osmosis membrane in a forward osmosis method, the osmotic pressure difference created at both sides of the separation functional layer acts as driving force to cause the solvent (such as water) to migrate from the feed solution into the draw solution.

The separation functional layer used is usually a thin-film. For physical support of the separation functional layer, therefore, it is common to use a support membrane such as a porous support or nonwoven fabric, and to combine the support membrane and separation functional layer to form a composite semipermeable membrane which is used as the forward osmosis membrane.

In a forward osmosis method, the solution is situated on both sides of the membrane. Pressure may therefore be present in a direction that detaches the separation functional layer from the support membrane. When the physical durability of the composite semipermeable membrane is low, such pressure can causes the separation functional layer to detach from the support membrane, or cause tearing of the separation functional layer, often impairing the membrane performance.

PTL 1 discloses a composite forward osmosis membrane comprising a support membrane and a separation functional layer, wherein the support membrane includes a polymer with a specific functional group, and the thickness and compressive strength of the support membrane are set to within specified ranges, and this publication explains that the composite forward osmosis membrane has reduced detachment between the support membrane and the separation functional layer.

PTL 2 discloses a composite semipermeable membrane comprising a base material, a porous support and a separation functional layer, wherein the porous support has a dense layer on the base material side and the thickness of the dense layer and the number of macro-voids present between the base material and the dense layer are within specified ranges, and this publication explains that the composite semipermeable membrane can maintain water permeability even when operated under high pressure.

PTL 3 discloses a separating membrane comprising a membrane with a separation function formed on a base material made of a nonwoven fabric made from filaments. In PTL 3 it is explained that if the proportion of macro-voids at the interface between the base material and the separating membrane is within a specified range it is possible to inhibit detachment of the separating membrane from the base material by pressure fluctuation during use.

PTL 4 discloses a composite membrane having a separation functional layer provided on a polysulfone membrane, wherein the layer mean pore size, average porosity and metaphenylenediamine diffusion in the region from the surface to a depth of 1 $\mu$m are within specified ranges, and this publication explains that the composite membrane reduces the economical burden and load for waste water disposal while maintaining both a high salt rejection rate and high water permeation performance.

PTL 5 discloses a separating membrane comprising a support layer containing a specific polymer with a cellulose backbone, and a polymer matrix layer made of polyamide, on a base material made of a polyester nonwoven fabric, and this publication explains that the separating membrane has high strength, high porosity and a high degree of hydrophilization while also exhibiting excellent desalination properties.

[CITATION LIST]

[PATENT LITERATURE]

[PTL 1] International Patent Publication No. WO2020/059769
[PTL 2] Japanese Unexamined Patent Publication No. 2018-039003
[PTL 3] Japanese Unexamined Patent Publication No. 2019-093366
[PTL 4] Japanese Unexamined Patent Publication No. 2011-194272
[PTL 5] Japanese Unexamined Patent Publication No. 2013-022588

SUMMARY

[TECHNICAL PROBLEM]

The composite forward osmosis membrane of PTL 1, however, is in need of improvement because it lacks sufficient physical durability against detachment of the separation functional layer from the support membrane, and adequate membrane performance as a forward osmosis membrane.

The composite semipermeable membrane of PTL 2 is a membrane suitable for a reverse osmosis method in which a liquid mixture is selectively separated by applying high pressure that is positive on the separation functional layer side, and because it is resistant to collapse of the macro-voids in the porous support during high-pressurizing operation, water permeability is maintained in the reverse osmosis method. The separating membrane of PTL 3 has increased peel strength between the nonwoven fabric serving as the base material and the porous support made of the macromolecular polymer. The composite membrane of PTL 4 has improved performance as a reverse osmosis membrane even without addition of fresh chemical agents after production of the membrane.

Moreover, PTLs 2 to 5 do not examine the physical durability of the disclosed membranes against detachment between the support membrane and separation functional layer. PTLs 2 to 4 also do not verify the practicality of the membranes as forward osmosis membranes.

It is an object of the invention to provide a practical forward osmosis membrane having high physical durability against pressure in a direction that can cause detachment of the separation functional layer from the support membrane, and also satisfactory performance as a forward osmosis membrane, as well as a forward osmosis membrane module including the same.

[SOLUTION TO PROBLEM]

The following are examples of embodiments of the invention for achieving the object stated above.

<Aspect 1> A forward osmosis membrane composed of a support membrane and a separation functional layer, wherein:

the support membrane comprises at least a porous support,
the separation functional layer is provided on the porous support,
the porous support comprises a dense layer and a macro-void layer in that order from the side contacting with the separation functional layer, in the depthwise direction,
the macro-void layer is a layer having macro-voids with long diameters of 1.0 $\mu$m or greater,
the dense layer is a layer lacking macro-voids,
the thickness of the dense layer is 1.0 to 9.5 $\mu$m, and
the macro-voids:

are present at 0 to 0.20/$\mu$m in region A which extends from the interface between the separation functional layer and the porous support up to a depth of 0 to 5.0 $\mu$m, and
are present at 0.04 to 0.40/$\mu$m in region B which extends from the interface between the separation functional layer and the porous support up to a depth of 5.0 to 10.0 $\mu$m.

<Aspect 2> The forward osmosis membrane according to aspect 1, wherein the macro-voids are present at 0 to 0.16/$\mu$m in region A.
<Aspect 3> The forward osmosis membrane according to aspect 1 or 2, wherein the macro-voids are present at 0.06 to 0.30/$\mu$m in region B.
<Aspect 4> The forward osmosis membrane according to any one of aspects 1 to 3, wherein the macro-voids are present at 0 to 0.12/$\mu$m in region A.
<Aspect 5> The forward osmosis membrane according to any one of aspects 1 to 4, wherein the macro-voids are present at 0.08 to 0.20/$\mu$m in region B.
<Aspect 6> The forward osmosis membrane according to any one of aspects 1 to 5, wherein the number of macro-voids present in region B is equal to or greater than the number of macro-voids present in region A.

<Aspect 7> The forward osmosis membrane according to any one of aspects 1 to 6, wherein the support membrane of the forward osmosis membrane consists entirely of the porous support.

<Aspect 8> The forward osmosis membrane according to any one of aspects 1 to 7, wherein the thickness of the dense layer is 8.0 $\mu$m or lower.

<Aspect 9> The forward osmosis membrane according to any one of aspects 1 to 8, wherein the thickness of the dense layer is 1.5 to 6.0 $\mu$m.

<Aspect 10> The forward osmosis membrane according to any one of aspects 1 to 9, wherein the support membrane is a hollow fiber support membrane.

<Aspect 11> The forward osmosis membrane according to aspect 10, wherein the hollow fiber support membrane has the dense layer on at least the inner surfaces of the hollow fibers.

<Aspect 12> The forward osmosis membrane according to any one of aspects 1 to 11, wherein the coefficient of variation in the average thickness of the separation functional layer of the forward osmosis membrane is 60% or lower.

<Aspect 13> The forward osmosis membrane according to any one of aspects 1 to 12, wherein the coefficient of variation in the average thickness of the separation functional layer of the forward osmosis membrane is 30% or lower.

<Aspect 14> The forward osmosis membrane according to any one of aspects 1 to 13, wherein the porous support includes one or more compounds selected from among polysulfone, polyethersulfone, and their derivatives.

<Aspect 15> The forward osmosis membrane according to any one of aspects 1 to 14, wherein the porous support includes polysulfone.

<Aspect 16> A forward osmosis membrane module comprising a forward osmosis membrane according to any one of aspects 1 to 15 housed in a housing.

<Aspect 17> A hollow fiber membrane comprising at least a porous support, wherein:

the porous support comprises a dense layer and a macro-void layer in that order from the outer surface or inner surface in the thickness direction of the membrane wall,
the macro-void layer is a layer having macro-voids with long diameters of 1.0 $\mu$m or greater,
the dense layer is a layer lacking macro-voids,
the thickness of the dense layer is 1.0 to 9.5 $\mu$m, and
the macro-voids:

are present at 0 to 0.20/$\mu$m in region A which extends from the outer surface or inner surface of the porous support up to a depth of 0 to 5.0 $\mu$m, and
are present at 0.04 to 0.40/$\mu$m in region B which extends from the outer surface or inner surface of the porous support up to a depth of 5.0 to 10.0 $\mu$m.

<Aspect 18> The hollow fiber membrane according to aspect 17, wherein the macro-voids are present at 0 to 0.16/$\mu$m in region A.

<Aspect 19> The hollow fiber membrane according to aspect 17 or 18, wherein the macro-voids are present at 0.06 to 0.30/$\mu$m in region B.

<Aspect 20> The hollow fiber membrane according to any one of aspects 17 to 19, wherein the macro-voids are present at 0 to 0.12/$\mu$m in region A.

<Aspect 21> The hollow fiber membrane according to any one of aspects 17 to 20, wherein the number of macro-voids present in region B is equal to or greater than the number of macro-voids present in region A.

<Aspect 22> The hollow fiber membrane according to any one of aspects 17 to 21, wherein the hollow fiber membrane consists entirely of the porous support.

<Aspect 23> The hollow fiber membrane according to any one of aspects 17 to 22, wherein the thickness of the dense layer is 8.0 $\mu$m or lower.

<Aspect 24> The hollow fiber membrane according to any one of aspects 17 to 23, wherein the thickness of the dense layer is 1.5 to 6.0 $\mu$m.

<Aspect 25> The hollow fiber membrane according to any one of aspects 17 to 24, wherein the hollow fiber membrane has the dense layer on at least the inner surfaces of the hollow fibers.

<Aspect 26> The hollow fiber membrane according to any one of aspects 17 to 25, wherein the porous support includes one or more compounds selected from among polysulfone, polyethersulfone, and their derivatives.

<Aspect 27> The hollow fiber membrane according to any one of aspects 17 to 26, wherein the porous support includes polysulfone.

<Aspect 28> The hollow fiber membrane according to any one of aspects 17 to 27, wherein the hollow fiber membrane is used as the support membrane of a forward osmosis membrane.

<Aspect 29> A hollow fiber membrane module comprising a hollow fiber membrane according to any one of aspects 17 to 28 housed in a housing.

<Aspect 30> A method for producing a hollow fiber membrane which includes:

discharging a spinning stock solution comprising a resin and a solvent from an external fluid channel of a double-tube nozzle, and an internal coagulating solution from an internal fluid channel of a double-tube nozzle;

immersing and coagulating the spinning stock solution discharged from the external fluid channel of a double-tube nozzle in the external coagulating solution through a free-running section; and

taking up the spinning stock solution while applying tension to the coagulated spinning stock solution,

wherein the spinning stock solution includes a resin (polymer) and a solvent, and

the temperature of the spinning stock solution discharged from the double-tube nozzle is higher than the temperature of the internal coagulating solution, the temperature difference between the two solutions being 5°C or higher and lower than 35°C.

<Aspect 31> The method according to aspect 30, wherein the tension is 4 g or greater and 60 g or lower.

<Aspect 32> The method according to aspect 30 or 31, wherein the temperature of the free-running section is 15°C or higher and 50°C or lower.

<Aspect 33> The method according to any one of aspects 30 to 32, wherein the relative humidity of the free-running section is 40% or higher and 100% or lower.

[ADVANTAGEOUS EFFECTS OF INVENTION]

The forward osmosis membrane according to one aspect of the invention can provide physical durability in directions that can cause detachment of the separation functional layer from the support membrane, and also provides satisfactory performance as a forward osmosis membrane.

The hollow fiber membrane according to another aspect of the invention can not only be suitably used as a support membrane for a forward osmosis membrane, but can also serve by itself as a separating membrane exhibiting consistent water permeability and pressure resistance.

BRIEF DESCRIPTION OF DRAWINGS

Fig. 1 is a cross-sectional schematic drawing showing one mode of a hollow fiber membrane module.

Fig. 2 is a scanning electron microscope image of a cross-section of the forward osmosis membrane obtained in Example 1.

Fig. 3 is a reference photograph with addition of auxiliary lines for analysis of Fig. 2.

Fig. 4 is a scanning electron microscope image of a cross-section of the forward osmosis membrane obtained in Comparative Example 1.

Fig. 5 is a reference photograph with addition of auxiliary lines for analysis of Fig. 4.

DESCRIPTION OF EMBODIMENTS

An embodiment of the invention will now be explained in detail.

<Forward osmosis membrane>

The forward osmosis membrane of the embodiment is a forward osmosis membrane composed of a support membrane and a separation functional layer, wherein:

the support membrane comprises at least a porous support,

the separation functional layer is provided on the porous support,

the porous support comprises a dense layer and a macro-void layer in that order from the side contacting with the separation functional layer, in the depthwise direction,

the macro-void layer is a layer having macro-voids with long diameters of 1.0 $\mu$m or greater,

the dense layer is a layer lacking macro-voids,

the thickness of the dense layer is 1.0 to 9.5 $\mu$m, and

the macro-voids:

are present at 0 to 0.20/$\mu$m in region A which extends from the interface between the separation functional layer and the porous support up to a depth of 0 to 5.0 $\mu$m, and

are present at 0.04 to 0.40/$\mu$m in region B which extends from the interface between the separation functional layer and the porous support up to a depth of 5.0 to 10.0 $\mu$m.

<Support membrane>

The support membrane in the forward osmosis membrane of the embodiment comprises at least a porous support. The support membrane may further comprise a base material in addition to the porous support.

[Base material]

The base material performs the role of a support membrane, thus providing strength to the forward osmosis membrane. The base material is preferably porous to allow passage of solvents. The base material may be made of a woven fabric, nonwoven fabric, mesh net or foam sintered sheet, for example. The material of the base material may be a polymer, and specifically a polyester, polyamide or polyolefin, or a blend or copolymer thereof.

The base material is preferably a porous body with larger pore sizes than the porous support and separation functional layer.

The thickness of the base material is preferably in the range of 40 to 150 $\mu$m for balance between ensuring support membrane strength and maintaining water permeability for the forward osmosis membrane. The base material will usually be a porous body with larger pore sizes than the porous support and separation functional layer. The mean pore size of the base material will usually be 0.1 to 100 $\mu$m. This is evaluated, specifically, based by the basis weight and air flow rate. The basis weight of the base material is 20 to 150 g/m$^2$, and the air flow rate of the base material measured by the Frazier method is 0.5 to 30 cc/(cm$^2 \times$ sec).

For this embodiment, the support membrane preferably has no base material and the forward osmosis membrane consists essentially of only the porous support and separation functional layer. A support membrane without a base material has high diffusibility for the draw solution in the support membrane, and can provide both water permeability and low reverse salt diffusion.

That the forward osmosis membrane "consists essentially of only the porous support and separation functional layer" means not that the constituent elements of the forward osmosis membrane are strictly limited to only the porous support and separation functional layer, but that other optional components may also be included, such as a dispersing agent, hydrophilic agent, coating agent, humectant or the separating membrane storage solution. These optional components may be inorganic compounds or organic compounds.

[Porous support]

The porous support performs the role of imparting strength to the separation functional layer. The porous support may also exhibit separation performance for particles that are insoluble in the solvent, but preferably it exhibits essentially no separation performance for ions dissolved in the solvent. That the porous support exhibits essentially no separation performance means that the separation performance for ions when the porous support is used as a forward osmosis membrane is lower than the separation performance for those ions when the separation functional layer is used as a forward osmosis membrane.

For this embodiment, the porous support comprises a dense layer and a macro-void layer in that order from the surface in the thickness direction of the membrane wall.

(Dense layer)

The dense layer is thought to assist in formation of a homogeneous separation functional layer during formation of the separation functional layer on the porous support, while also functioning to keep the water permeability within a suitable range when used as a forward osmosis membrane.

The separation functional layer in the forward osmosis membrane of the embodiment is formed by interfacial polymerization between a polyfunctional amine and a polyfunctional acid halide, for example, as explained below. The dense layer holds and releases a polyfunctional amine solution supplied while forming the separation functional layer. This helps to supply the polyfunctional amine solution to the site of polyamide polymerization (the interface between the polyfunctional amine solution and the polyfunctional acid halide solution), while also serving as an origin for growth of folds in the separation functional layer. In addition, forming the separation functional layer to infiltrate into the fine irregularities of the dense layer increases adhesiveness between the separation functional layer and support membrane, so that pressure that has been applied to the separation functional layer in a direction that can cause it to detach from the support membrane will be evenly dispersed and alleviated.

A homogeneous dense layer is preferred for exhibiting advantageous effects such as the function of maintaining water permeability and high adhesiveness between the separation functional layer and support membrane, throughout the entire membrane instead of only in parts of the membrane. Formation of a homogeneous dense layer is also preferred for exhibiting the aforementioned advantageous effects throughout the entire module when the forward osmosis membrane of the embodiment is used as a module.

A "homogeneous" dense layer means that the parameters such as thickness and pore size are within predetermined ranges regardless of the location in the dense layer. Homogeneity of the dense layer in the module means that the aforementioned parameters are within the predetermined ranges regardless of the location of any forward osmosis membrane observed in the module.

It is preferred for the dense layer to have continuous pores in order to efficiently hold and release the polyfunctional amine solution.

A dense layer is a layer that lacks the macro-voids described below.

As explained below, macro-voids are pores with long diameters of 1.0 $\mu$m or greater. The dense layer is therefore a layer without pores, or a layer that has pores whose long diameters are smaller than 1.0 $\mu$m. The long diameters of the pores in the dense layer are preferably 0.5 $\mu$m or smaller.

The dense layer preferably includes pores with long diameters of smaller than 1.0 $\mu$m. The long diameters of the pores in the dense layer are preferably 0.001 $\mu$m or greater from the viewpoint of favorably performing the role described above.

The thickness of the dense layer is 1.0 to 9.5 $\mu$m, preferably 1.5 to 9.0 $\mu$m, more preferably 2.0 to 8.0 $\mu$m, even more preferably 2.5 to 7.5 $\mu$m, yet more preferably 3.0 to 7.0 $\mu$m and most preferably 3.5 to 6.0 $\mu$m. The dense layer preferably has a thickness in this range in order to carry out this function and to avoid notably impeding permeation of the solvent, thus allowing water permeability to be ensured.

The dense layer is preferably located on the outermost surface of the porous support. If the dense layer is located on the outermost surface of the porous support, it will be possible to facilitate formation of the separation functional layer and reduce defects, while also maintaining a high separation function and preventing contamination of the membrane interior even when the porous support alone is used as a separating membrane.

If the porous support is a hollow fiber type, the dense layer is preferably present at least on the inner surfaces of the hollow fibers of the porous support.

According to this embodiment, a plurality of dense layers may be provided. When the porous support has a plurality of dense layers, the dense layers are preferably present on the outer surfaces on both sides of the porous support, for example.

According to the embodiment, the dense layer in the support membrane is a layer in contact with the separation functional layer. When fabricating a porous support that is to form a support membrane, however, the macro-voids may coincidentally reach the porous support surface and contact the separation functional layer. In such cases, the layer contacting the separation functional layer may be the macro-void layer. In order to advantageously exhibit the effect of the embodiment, however, the dense layer is preferably present over the majority of the surface of the porous support that is in contact with the separation functional layer. This condition can be determined by observing a cross-section of the porous support under the conditions described below, confirming that the number of cross-sectional images in which the macro-voids reach the surface of the porous support is 50% or less of the number of observed cross-sectional images. The percentage is most preferably 0%. When macro-voids accidentally reach the support membrane surface, the phrase "interface between the separation functional layer and dense layer", as used herein, may be interpreted in the wider sense of "interface between the separation functional layer and support membrane".

(Macro-void layer)

The macro-void layer is a layer that includes voids (macro-voids) having long diameters of 1.0 $\mu$m or greater. The thickness of the macro-void layer is preferably 5 to 300 $\mu$m. The macro-void layer may reach to the surface on the opposite side of the porous support, or if another dense layer is present on the surface of the opposite side of the porous support, it may be in a range up to that dense layer.

The macro-voids are not particularly restricted in their sizes and shapes so long as they have long diameters of 1.0 $\mu$m or greater. However, from the viewpoint of both improving the water permeability inside the porous support membrane and obtaining durability (pressure resistance) against application of pressure, the long diameters of the macro-voids are preferably 200 $\mu$m or smaller, more preferably 150 $\mu$m or smaller, even more preferably 120 $\mu$m or smaller, 100 $\mu$m or smaller, or 80 $\mu$m or smaller. From the same viewpoint, the short diameters of the macro-voids are preferably 50 $\mu$m or smaller, more preferably 40 $\mu$m or smaller, even more preferably 30 $\mu$m or smaller and most preferably 20 $\mu$m or smaller or 10 $\mu$m or smaller.

The macro-void layer includes macro-voids with long diameters of 1.0 $\mu$m or greater, preferably with the average value for the long diameters and the average value for the short diameters calculated for all of the macro-voids in the macro-void layer being within the ranges specified above, and more preferably with each of the long diameters and short diameters of all of the macro-voids in the macro-void layer being within the ranges specified above.

If the long diameters or short diameters of the macro-voids are larger than the specified ranges, the pressure resistance of the porous support membrane may be impaired, or the porous support membrane may become deformed during use, resulting in impairment of the expected performance.

Based on research by the present inventors, the macro-voids generally have approximately ellipsoid cross-sections. The macro-voids also usually have their long diameter directions essentially perpendicular to the direction of the interface with the dense layer inside the macro-void layer. When the cross-sections of the macro-voids are approximately ellipsoid, the long diameters are the lengths of the elliptical long axes and the short diameters are the lengths of the elliptical short axes.

(Region A and region B, and macro-void ratio inside each region)

In the forward osmosis membrane of the embodiment, the region to a depth of 0 to 5.0 $\mu$m from the interface between the separation functional layer and dense layer (interface between the separation functional layer and support membrane) is defined as "region A", and the region to a depth of 5.0 to 10.0 $\mu$m from the interface between the separation functional layer and dense layer (interface between the separation functional layer and support membrane) is defined as "region B".

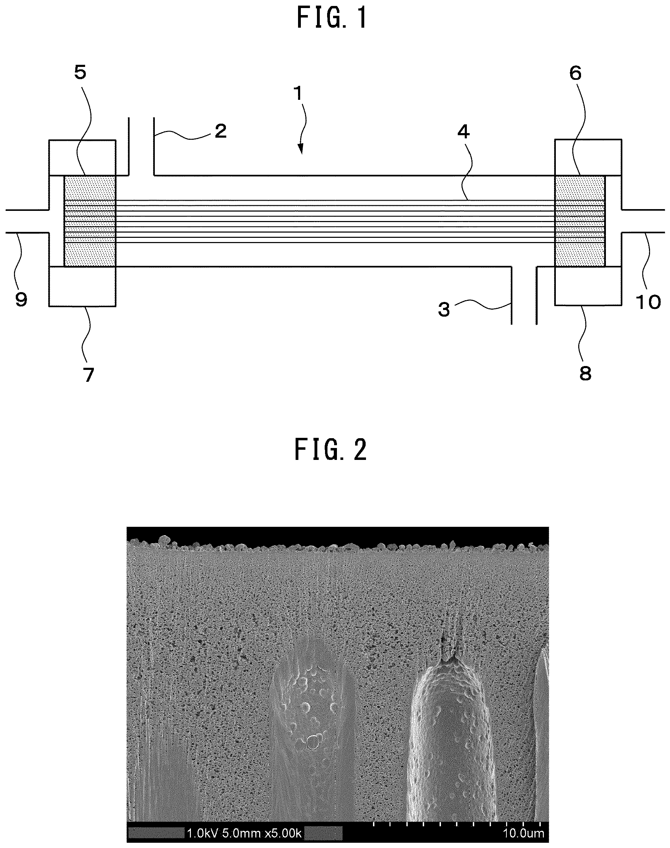

Macro-voids having long diameters of 1.0 $\mu$m or greater are present at 0 to 0.20/$\mu$m in region A in the in-plane direction (the direction parallel to the in-plane direction of the membrane, according to Fig. 2). The macro-void ratio in region A is preferably 0 to 0.16/$\mu$m, more preferably 0 to 0.12/$\mu$m and even more preferably 0.02 to 0.10/$\mu$m.

The macro-void ratio in region B is 0.04 to 0.40/$\mu$m in the in-plane direction. The macro-void ratio in region B is preferably 0.06 to 0.30/$\mu$m, more preferably 0.08 to 0.20/$\mu$m and even more preferably 0.10 to 0.19/$\mu$m.

The macro-void ratio in region B is preferably equal to or greater than the macro-void ratio in region A, and more preferably greater than the macro-void ratio in region A.

According to this embodiment, adhesiveness between the separation functional layer and support membrane is increased if the numbers of macro-voids in region A and region B are within these specified numerical ranges. When pressure in a direction in which the separation functional layer detaches from the support membrane (back pressure) is applied, the pressure can be evenly dispersed and alleviated, allowing higher durability to be exhibited. This is preferred for a wider degree of freedom in the apparatus design and operating conditions for use as a forward osmosis membrane.

The support membrane in which the number of macro-voids in region B is within the aforementioned range also maintains physical durability while maintaining diffusibility of the draw solution in the support membrane during use as a forward osmosis membrane. This will increase the water permeability as a forward osmosis membrane, resulting in more highly efficient treatment of solutions.

When regions A and B of the porous support both have numbers of macro-voids within the aforementioned specified ranges, the support of the porous support may be used as a separating membrane. In this case, the separation performance of the membrane will be improved and contamination inside the membrane will be reduced, if region A satisfies the aforementioned condition for the macro-void ratio. If region B satisfies the aforementioned condition for the macro-void ratio, both high water permeability and high strength will be obtained.

(Measurement of dense layer thickness, and macro-void ratio in region A and region B)

The following procedure can confirm whether or not the porous support satisfies the conditions specified above.

The support membrane or forward osmosis membrane is cut perpendicular to the in-plane direction of the membrane at an arbitrary location to obtain a cross-section. The cross-section is observed with a microscope and a cross-sectional image with a width of at least 5 $\mu$m is obtained. Voids with long diameters of 1.0 $\mu$m or greater (macro-voids) are identified in the cross-sectional image.

When a macro-void with a long diameter of 1.0 $\mu$m or greater is found in the cross-sectional image, the shortest distance from the section of the outer edge of the macro-void nearest to the separation functional layer (apex) and the separation functional layer is measured, and that distance is recorded as the thickness of the dense layer. When multiple voids are present in the cross-sectional image, the void having the apex nearest to the separation functional layer is selected, and the distance between the apex of that void and the separation functional layer is measured and recorded as the thickness of the dense layer.

When no void with a long diameter of 1.0 $\mu$m or greater is present in the cross-sectional image, the observation magnification is lowered and microscopic observation is repeated in a wider visual field. If voids with long diameters of 1.0 $\mu$m or greater are still not found, then a maximum of 50 images are taken at different locations and the 9 images with the largest number of macro-voids in region B are used to calculate the average value.

The region up to a depth of 0 to 5.0 $\mu$m from the interface between the separation functional layer and dense layer is defined as "region A" while the region up to a depth of 5.0 to 10.0 $\mu$m from the interface between the separation functional layer and dense layer is defined as "region B", the number of macro-voids with long diameters of 1.0 $\mu$m or greater in region A and region B are counted, and the macro-void ratio in each of region A and region B is calculated by dividing the counted number by the width of the observed membrane cross-section.

Measurement of the dense layer thickness and the macro-void ratio in region A and region B is conducted for n = 9, and the average value is recorded as the measured value. Specifically, membrane samples from 9 points are prepared, and each sample is subjected to the procedure described above, calculating the average value for each. The locations where the 9 samples are taken may be appropriately determined according to the measured coefficient of variation for the average thickness of the separation functional layer, described below.

Each membrane sample may be observed using a scanning electron microscope or transmission electron microscope, in the region near the interface of contact between the porous support in the support membrane and the separation functional layer, or near the front side of the support membrane, to measure the thickness of the dense layer of the porous support in the support membrane, and the macro-void ratio in region A and region B.

Examples of observation using a scanning electron microscope are described below.

For a cross-sectional image from a scanning electron microscope, for example, the observation sample may be prepared in the following manner.

The membrane sample is immersed in purified water, frozen using liquid nitrogen, and then dried by a freeze-drying method. A cross-section of the dried sample perpendicular to the in-plane direction of the membrane is prepared by cleavage or Broad Ion Beam (BIB) processing, and preferably BIB processing. The obtained cross-section is thinly coated with platinum, platinum/palladium, osmium tetroxide or osmium and preferably osmium, and used as the observation sample. The cross-sectional observation sample is observed at an acceleration voltage of 1 to 6 kV, and preferably an acceleration voltage of 1 kV

The observation magnification may be any magnification that allows observation of the contact interface between the porous support and separation functional layer, or the region near the surface of the support membrane. For example, it is preferably 1,000x to 20,000x and more preferably 5,000x.

Based on the obtained electron micrograph (cross-sectional image), the thickness of the dense layer and the sizes of the voids may be directly measured based on a scale, and the numerical values calculated by the procedures described above.

Each measured value may be obtained as an average in a measured region with a cross-section width of about 5 to 100 $\mu$m. The measured region is preferably 10 to 50 $\mu$m, more preferably 20 to 30 $\mu$m and most preferably 25 $\mu$m.

For the embodiment, the contact interface between the porous support and separation functional layer of the forward osmosis membrane can be confirmed in the following manner.

As one method, an image of the cross-section of the forward osmosis membrane taken using a scanning electron microscope is loaded into appropriate image processing software and subjected to image processing. The image processing software used may be ImageJ (developed by the U.S. National Institutes of Health), for example. The SEM photograph loaded into ImageJ is binarized by an appropriate binarization method selected based on the obtained image, and preferably Otsu's method. The average brightness in the direction horizontal to the membrane surface is calculated for the entire obtained binarized image along every predetermined distance (such as 1 pixel) from the membrane surface in the depthwise direction. The average brightnesses from the surface of the separation functional layer toward the support membrane side are successively compared, with the horizontal direction at the point of highest average brightness considered to be the contact interface between the porous support and separation functional layer of the forward osmosis membrane.

The forward osmosis membrane is preferably observed with the separation functional layer surface as horizontal as possible within the visual field. The observation magnification of the cross-sectional image is preferably 1,000x to 20,000x, for example, and more preferably 5,000x. The cross-section width (the length in the direction parallel to the direction of the interface between the support membrane and the separation functional layer) may be 5 to 100 $\mu$m, preferably 10 to 50 $\mu$m, more preferably 20 to 30 $\mu$m and most preferably 25 $\mu$m.

Even when the contact interface between the porous support and separation functional layer of the forward osmosis membrane is not straight, the aforementioned method can be used to unambiguously discern the contact interface between the porous support and separation functional layer of the forward osmosis membrane so long as the forward osmosis membrane is not observed with intentional bending.

(Material of porous support)

The material of the porous support is not particularly restricted. From the viewpoint of facilitating molding, however, the porous support is preferably formed of a resin, and more preferably it is formed of a thermoplastic resin. A thermoplastic resin is a material composed of a straight-chain polymer, which when heated exhibits the property of deformation or fluidity under application of external force.

Examples of thermoplastic resins include polysulfones, polyethersulfones, polyketones, polyamides, polyesters, cellulose-based polymers, vinyl polymers, polyphenylene sulfide, polyphenylene sulfide sulfone, polyphenylene sulfone and polyphenylene oxide, used either as homopolymers or copolymers, or alone or as blends of two or more. Derivatives having any functional groups on the main chain, side chains or ends of these polymers may also be used as resins to form the porous support.

Cellulose-based polymers such as cellulose acetate and cellulose nitrate; and vinyl polymers such as polyethylene, polypropylene, polyvinyl chloride, chlorinated vinyl chloride and polyacrylonitrile, may be used. Preferred are one or more selected from among polysulfones, polyacrylonitrile, polyamides, polyesters, polyvinyl alcohol, polyphenylene sulfide sulfone, polyphenylene sulfone, polyphenylene sulfide, polyethersulfone, polyvinylidene fluoride, cellulose acetate and polyvinyl chloride and chlorinated vinyl chloride.

More preferred are cellulose acetate, polysulfones, polyethersulfone, polyketones and polyacrylonitrile. Of these materials, polysulfones and polyethersulfone are preferred for high chemical, mechanical and thermal stability, and easy moldability.

The main component of the porous support is preferably one of the aforementioned resins or their derivatives. Here, the "main component" is one present at 50 mass% or greater with respect to the total mass of the porous support. From the viewpoint of facilitating pore size control, the material of the porous support is more preferably a polysulfone.

(Thickness and shape of porous support)

When the support membrane consists of a composite structure of a base material and porous support, the thickness of the porous support is preferably 0.02 to 0.10 mm from the viewpoint of both water permeation resistance and strength.

When the support membrane consists entirely of the porous support, the thickness of the porous support is preferably 0.05 to 3.00 mm, more preferably 0.10 to 1.00 mm and even more preferably 0.15 to 0.50 mm, from the viewpoint of both water permeation resistance and strength.

When the support membrane consists entirely of the porous support, the porous support form is preferably a film (flat membrane), tube or hollow fibers, or a chemically or physically modified form thereof. From the viewpoint of allowing a membrane with a larger membrane area to be housed in a smaller space, the porous support is more preferably in the form of hollow fibers. The form of "hollow fibers" means hollow tubes with outer diameters of about 5 mm or smaller, and "tubes" means hollow tubes with outer diameters exceeding about 5 mm.

[Physical properties of support membrane]

The physical properties of the support membrane may be represented by the purified water permeability and compressive strength.

Some of the physical property values can be measured using the support membrane module having one or multiple support membranes housed in a housing; using the support membranes removed after disassembling the support membrane module; or using forward osmosis membranes with the separator layers removed by a publicly known method, in a manner that does not notably impair the properties of the support membranes.

The physical properties may be measured by the methods described below under "Examples".

[Purified water permeability]

From the viewpoint of both water permeation resistance and film strength, and of facilitating formation of a suitable separation functional layer, the purified water permeability of the hollow fiber support membrane is preferably 10 or 1000 $(kg/(m^2 \times hr \times bar))$, more preferably 50 to 700 $(kg/(m^2 \times hr \times bar))$, even more preferably 100 to 700 $(kg/(m^2 \times hr \times bar))$ and most preferably 300 to 600 $(kg/(m^2 \times hr \times bar))$.

[Compressive strength]

From the viewpoint of imparting practical strength to the support membrane and of achieving both water permeation resistance and strength, the compressive strength of the hollow fiber support membrane is preferably 0.25 to 1.5 MPa, more preferably 0.40 to 1.2 MPa and even more preferably 0.50 to 1.0 MPa.

If the support membrane has compressive strength within the aforementioned range it will be possible to reliably maintain the performance of the forward osmosis membrane. If the compressive strength is too high, the cross-sectional structure of the membrane is too dense in most cases, resulting in greater water permeation resistance and internal concentration polarization. In such cases the water permeability of the forward osmosis membrane will tend to be lower.

In order to increase the compressive strength of the support membrane it is effective to increase the polymer concentration and increase the film thickness of the support membrane during formation of the porous support.

[Inner diameter and outer shape of hollow fiber support membrane]

When the support membrane is a hollow fiber support membrane, the inner diameter and outer shape of the hollow fiber support membrane are not particularly restricted. However, in consideration of film formation stability, facilitated handling, and membrane area when prepared as a module, preferably the outer diameter is 0.10 to 3.00 mm and the inner diameter is 0.03 to 2.50 mm, and more preferably the outer diameter is 0.20 to 1.50 mm and the inner diameter is 0.10 to 1.00 mm, while in consideration of both strength and allowing permeation of feed solutions containing poorly soluble substances through the hollow sections without obstruction, preferably the outer diameter is 0.50 to 1.35 mm and the inner diameter is 0.25 to 1.00 mm.

The film thickness of the hollow fiber support membrane is preferably 0.02 to 1.00 mm from the viewpoint of strength, preferably 0.05 to 0.50 mm from the viewpoint of both strength and handling, and even more preferably 0.10 to 0.35 mm from the viewpoint of both water permeation resistance and strength, and from the viewpoint of diffusibility of the solution in the thick sections of the membrane (membrane walls) during use as a forward osmosis membrane.

[Separation functional layer]

The separation functional layer essentially performs a separation function for solutes in the forward osmosis membrane. More specifically, it performs the function of separating the solvent in the liquid mixture from solutes such as ions dissolved in the solvent. The composition and thickness of the separation functional layer is set according to the purpose of use of the forward osmosis membrane.

The separation functional layer is disposed on the front side of the support membrane. When the support membrane is considered to have a front and back side, it is preferably disposed on either one of the front side and the back side. However, the separation functional layer may also be disposed on both sides of the support membrane, or on the inner sides of the pores of the support membrane.

The separation functional layer may be provided on one side of the support membrane or on both sides of the support membrane. When the separation functional layer is provided on both sides of the support membrane, the thickness, separation performance and salt blocking performance on each side may be the same or different.

When the separation functional layer is disposed on both sides of the support membrane, the "separation functional layer side", as used herein, refers to the side of the layer that blocks solutes with higher rejectivity in the entire forward osmosis membrane. The method for detecting which side blocks solutes with higher rejectivity may be the following, for example.

Purified water as feed solution is situated on one side while a draw solution is situated on the other side across the forward osmosis membrane, while separately the two solutions are disposed in the opposite manner, and the amount of reverse salt diffusion into the feed solution is evaluated for both cases. After comparing the two evaluation results, the feed solution side in the arrangement with the smaller reverse salt diffusion is considered to be the side that blocks the solute of the draw solution at the higher rate (the separation functional layer side).

The draw solution used may be a 3.5 mass% aqueous sodium chloride solution or a 50 mass% aqueous isopropanol solution, and is preferably a 3.5 mass% aqueous sodium chloride solution.

The material of the separation functional layer may be one or more compounds selected from among macromolecular polymers, inorganic substances and organic-inorganic hybrid compounds, as well as compositions obtained by dispersing or compatibilizing such inorganic compounds or organic compounds.

The separation functional layer composed of a macromolecular polymer allows preferential permeation of the solvent while blocking solute, and thus exhibits the essential separation performance. Examples of macromolecular polymers to compose such a separation functional layer include polyamides, polyvinyl alcohols, sulfonated polyethersulfone, polypiperazine amide and polyimides, as well as composite materials composed of two or more of these.

[Polyamide separation functional layer]

According to the embodiment, a polyamide separation functional layer composed mainly of polyamide may be suitably used from the viewpoint of facilitating formation of a thin-film without defects on the porous support. The phrase "composed mainly of polyamide" means that the mass ratio of polyamide in the separation functional layer with respect to the total mass of the separation functional layer is 50 mass% or greater, 75 mass% or greater or 95 mass% or greater. The polyamide mass ratio may also be 100 mass% with respect to the total mass of the separation functional layer.

The polyamide separation functional layer is preferably a polycondensation product of a polyfunctional amine and a polyfunctional acid halide. Formation of the polyamide separation functional layer includes formation of a polyamide backbone by using a water-soluble solution comprising a polyfunctional amine and an organic solvent solution comprising a polyfunctional acid halide, for interfacial polycondensation on the front side of the porous support. The organic solvent in the organic solvent solution comprising the polyfunctional acid halide is preferably an organic solvent that is immiscible with water.

The method of forming the polyamide separation functional layer is explained in detail below.

[Average thickness of separation functional layer]

The average thickness of the separation functional layer is preferably as small as possible, without pinholes. However, the thickness is preferably a suitable thickness to maintain mechanical strength and chemical resistance. In consideration of film formation stability and water permeation resistance, the average thickness of the separation functional layer composed of a macromolecular polymer (a macromolecular polymer thin-film), for example, is preferably 0.01 to 3 $\mu$m and more preferably 0.05 to 1 $\mu$m.

The average thickness of the separation functional layer is measured by microscopic observation. Specifically, the separating membrane is embedded in a resin and sliced to prepare an ultrathin section, for example. The obtained slice is treated by dyeing, for example, and observed with a transmission electron microscope (TEM) or scanning electron microscope (SEM). A preferred method for measuring the film thickness is a method in which an image of a cross-section taken in the thickness direction of the separation functional layer using a scanning electron microscope is loaded into appropriate image processing software and processed. The image processing software used may be ImageJ (developed by the U.S. National Institutes of Health), for example. Based on the SEM image loaded into ImageJ, the average thickness of each single separation functional layer in a single image is determined by extracting the outline of the separation functional layer, filling in the interior and calculating the area of the separation functional layer, converting to average thickness against a previously drawn calibration curve.

More specifically, extraction of the outline of the separation functional layer is done by binarizing an SEM photograph loaded into ImageJ, for example, using a publicly known binarization method, and preferably Otsu's method, appropriately selected based on the image. For the outline at the contact interface between the porous support and the separation functional layer of the forward osmosis membrane, the average brightness on the membrane surface and in the horizontal direction is calculated every predetermined distance (such as 1 pixel) from the membrane surface toward the depthwise direction, throughout the entire obtained binarized image. The average brightnesses from the surface of the separation functional layer toward the support membrane side are successively compared, with the horizontal direction at the point of highest average brightness considered to be the contact interface between the porous support and separation functional layer of the forward osmosis membrane, determining the linear portions as the outline.

A curve obtained by connecting the sections with differing contrast from the background by continuous lines in the obtained binarized image is used as the outline on the surface of the separation functional layer. The outlines in the thickness direction of the separation functional layer may be both edges of the acquired image. By connecting the lines it is possible to extract the outline of the separation functional layer.

The observation magnification of the cross-sectional image is preferably 5,000x to 30,000x, for example, and more preferably 10,000x. The width of the cross-section (the length in the direction parallel to the direction of the interface between the support membrane and the separation functional layer) is preferably about 5 to 100 $\mu$m, more preferably 5 to 50 $\mu$m, even more preferably 5 to 20 $\mu$m and most preferably 13 $\mu$m.

Even when the contact interface between the porous support and separation functional layer of the forward osmosis membrane is not straight, the aforementioned method can be used to unambiguously discern the contact interface between the porous support and separation functional layer of the forward osmosis membrane so long as the forward osmosis membrane is not observed with intentional bending.

[Coefficient of variation in average thickness of separation functional layer]

According to the embodiment, the coefficient of variation in the average thickness of the separation functional layer of the forward osmosis membrane is preferably within a specified range. Also according to the embodiment, the coefficient of variation is the value of the standard deviation for the average thickness, divided by the average for the average thicknesses, expressed as a percentage (%). From the viewpoint of further eliminating partial functional defects in the separation functional layer during formation of the separation functional layer and increasing the effect of the heat treatment, the coefficient of variation in the average thickness of the separation functional layer is preferably 0 to 60%, more preferably 0 to 50%, even more preferably 0 to 40%, yet more preferably 0 to 30% and most preferably 0 to 20%.

According to the embodiment, the following is the preferred method for measuring the average thickness of the separation functional layer and its coefficient of variation.

Each hollow fiber membrane is divided into 3 parts in the lengthwise direction to obtain 3 samples. A cross-section perpendicular to the in-plane direction of the membrane (the lengthwise direction) is obtained at arbitrary locations of the three samples, preferably with two divisions in the lengthwise direction of each sample, and each is observed, measuring the average thickness of the separation functional layer for the image.

This procedure is carried out for three different forward osmosis membranes, or three forward osmosis membranes cut out from a single forward osmosis membrane module, and the average thickness of the separation functional layer is measured for a total of 9 images. The 9 average thickness values are used to calculate the average value for the average thicknesses and the standard deviation in the average thickness, further calculating the coefficient of variation from these values.

When three forward osmosis membranes are cut out from a single forward osmosis membrane module, they are preferably cut out at the three locations: outer periphery, middle part and center section, in the radial direction of the forward osmosis membrane module. This method of cutting out sections allows evaluation of variation in the module as a whole.

In the case of a flat forward osmosis membrane, the membrane is divided into 9 portions to obtain 9 samples, and a cross-section is obtained from the center section of each sample and observed with a microscope.

The visual field of the microscope image used for measurement of the average thickness of the separation functional layer is preferably about 5 to 100 $\mu$m, more preferably 5 to 50 $\mu$m, even more preferably 5 to 20 $\mu$m and most preferably 13 $\mu$m, as the width of the cross-section (the length in the direction parallel to the direction of the interface between the support membrane and the separation functional layer). The magnification of the microscope image is preferably 5,000x to 30,000x, and more preferably 10,000x.

The forward osmosis membrane of the embodiment preferably has a support membrane and separation functional layer structure with uniformity within this range. If the structures of the separation functional layer and of the support membrane near the separation functional layer are uniform, it will be possible to exhibit the desired function and physical durability at any arbitrary part of the separation functional layer.

In the case of hollow fiber forward osmosis membranes, for example, the structure of each forward osmosis membrane is preferably uniform in either or both the circumferential direction and lengthwise direction, more preferably being uniform in both the circumferential direction and lengthwise direction, and most preferably being uniform for the membranes at all sections when the hollow fibers are bundled in a module.

[Evaluation of forward osmosis membrane and forward osmosis]

The forward osmosis membrane of the embodiment has high water permeability (flux) and low reverse salt diffusion (RSF).

The water permeability and reverse salt diffusion of the forward osmosis membrane of the embodiment are evaluated by forward osmosis treatment using purified water as the feed solution, using 3.5 mass% aqueous sodium chloride as the draw solution, and with each solution at 25°C.

When the forward osmosis membrane has a structure with a support membrane and a separation functional layer disposed on one side of the support membrane, the feed solution and the draw solution will each have significantly different water permeabilities depending on whether they are situated on the separation functional layer side or the support membrane side.

According to the embodiment, the feed solution is preferably situated on the separation functional layer side and the draw solution on the support membrane side, in order to further reduce the risk of membrane contamination during actual use of the forward osmosis membrane. For evaluation of both the water permeability and reverse salt diffusion of the forward osmosis membrane, it is desirable to have the feed solution on the separation functional layer side and the draw solution on the support membrane side so as to reflect actual performance.

The reverse salt diffusion of the forward osmosis membrane is the amount of draw solute that migrates from the draw solution to the feed solution, when the feed solution has been situated on the separation functional layer side and the draw solution having higher osmotic pressure has been situated on the support membrane side, across the forward osmosis membrane. The reverse salt diffusion (RSF) is defined by the following mathematical formula (1).

$$RSF = G/(M \times H) \ (1)$$

In the formula, G is the amount of migrated draw solute (g), M is the effective membrane area (m$^2$) of the forward osmosis membrane, and H is time (hr).

A lower reverse salt diffusion (RSF) is preferred for the forward osmosis membrane of the embodiment. A larger reverse salt diffusion can create problems such as: increased infiltration of draw solute in the draw solution into the feed solution; increased infiltration of solute in the feed solution into the draw solution; lower purity of the feed solution concentrate and loss of balance of the components; contamination of the draw solution; and reduced components in the draw solution with time. According to one aspect, the reverse salt diffusion of the forward osmosis membrane of the embodiment is 2.0 g/(m$^2$ × hr) or lower, preferably 1.2 g/(m$^2$ × hr) or lower, more preferably 0.80 g/(m$^2$ × hr) or lower, even more preferably 0.40 g/(m$^2$ × hr) or lower and most preferably 0.30 g/(m$^2$ × hr) or lower. From the viewpoint of facilitating production of the forward osmosis membrane, the reverse salt diffusion R of the forward osmosis membrane of the embodiment is preferably 0.001 g/(m$^2$ × hr) or greater, as the expected advantageous effect of the invention can still be exhibited with a reverse salt diffusion R in this range.

The water permeability (flux) of the forward osmosis membrane is the amount of water migrating from the feed solution to the draw solution when the feed solution flows to the separation functional layer side, with the draw solution, having higher osmotic pressure, situated on the support membrane side, across the forward osmosis membrane. The water permeability (flux) of the forward osmosis membrane is defined by the following mathematical formula (2).

$$\text{Flux} = \text{L}/(\text{M} \times \text{H}) \, (2)$$

In the formula, L is the amount of permeated water (kg), M is the effective surface area (m$^2$) of the forward osmosis membrane, and H is time (hr).

A higher water permeability (flux) is preferred for the forward osmosis membrane of the embodiment. From the viewpoint of achieving migration of the solvent with high efficiency, the water permeability of the forward osmosis membrane is preferably 1.0 kg/(m$^2$ × hr) or greater, more preferably 3.0 kg/(m$^2$ × hr) or greater, even more preferably 5.0 kg/(m$^2$ × hr) or greater and most preferably 7.0 kg/(m$^2$ × hr) or greater. If the water permeability is excessively high, however, the reverse salt diffusion may increase, and therefore the water permeability of the forward osmosis membrane is preferably 50 kg/(m$^2$ × hr) or lower.

According to the embodiment, the salt permeability (RSF/flux, units: g/kg), defined as the reverse salt diffusion (RSF) divided by the water permeability (flux), is an index representing the selectivity of solvent permeation and salt permeation. A lower value for the salt permeability represents more difficult permeation of salts, and easier permeation of the solvent. A lower value is therefore preferred.

In common conventional forward osmosis membranes, lower reverse salt diffusion has generally caused significantly lower water permeability, which has usually resulted in a larger RSF/flux value. The forward osmosis membrane of the embodiment, however, exhibits a sufficiently low RSF/flux value.

From the viewpoint of practical concentration of the feed solution and highly efficient migration of solvent, the RSF/flux value of the forward osmosis membrane of the embodiment is preferably 0.20 g/kg or lower, more preferably 0.16 g/kg or lower, even more preferably 0.08 g/kg or lower, yet more preferably 0.06 g/kg or lower and most preferably 0.04 g/kg or lower. The RSF/flux value is ideally 0 g/kg, but it may be 0.0001 g/kg or greater, for example, from the viewpoint of facilitating production of the forward osmosis membrane.

According to the embodiment, the physical durability of the forward osmosis membrane can be evaluated by forward osmosis treatment with application of a predetermined transmembrane pressure difference.

The transmembrane pressure difference may have positive pressure applied to either side of the forward osmosis membrane. However, both the forward osmosis membrane performance and physical durability can be simultaneously evaluated by conducting the evaluation of forward osmosis by application of a transmembrane pressure difference with positive pressure on the support membrane side and on the draw solution side of the forward osmosis membrane. In this case, pressure may be applied in a direction that causes detachment of the separation functional layer from the support membrane. When the physical durability of the forward osmosis membrane is low, therefore, it is unable to withstand the pressure and the separation functional layer may partially detach from the support membrane, or cracks may form in parts of the separation functional layer. When this occurs, the separation functional layer is irreversibly altered and the draw solution permeates more easily to the feed solution side, resulting in markedly increased values for the reverse salt diffusion and salt permeability.

Consequently, if the reverse salt diffusion and salt permeability are measured by forward osmosis treatment with application of a predetermined transmembrane pressure difference, it is possible to examine the degree of physical durability of the forward osmosis membrane, and especially of the separation functional layer.

The following is an example of a specific method for evaluating the physical durability of the forward osmosis membrane.

First, using purified water as the feed solution and a 3.5 mass% aqueous sodium chloride solution as the draw solution, with each solution at 25°C, forward osmosis treatment is carried out for 5 minutes or longer with the transmembrane pressure difference at a reference pressure of 20 kPa, which is positive on both the support membrane side and the draw solution side, and the water permeability and reverse salt diffusion are determined as reference values. After then thoroughly washing the forward osmosis membrane with water, the transmembrane pressure difference is changed to a predetermined pressure that is higher than the reference pressure, and forward osmosis treatment is carried out otherwise under the same conditions, determining the water permeability (flux) and reverse salt diffusion (RSF). After again washing the forward osmosis membrane with water, forward osmosis treatment is carried out under the reference pressure and the water permeability (flux) and reverse salt diffusion (RSF) are determined. The values are used as the water permeability and reverse salt diffusion after application of transmembrane pressure difference at the predetermined pressure, to calculate the RSF/flux ratio after application of the predetermined pressure.

The reference RSF/flux value can be divided by the RSF/flux after application of the predetermined pressure, and converted to a percentage as the performance maintenance rate (%) after application of the predetermined pressure. In the forward osmosis membrane of the embodiment, the performance maintenance rate after application of the predetermined transmembrane pressure difference is preferably 40% or higher and more preferably 50% or higher.

Generally, however, a smaller RSF/flux value is considered more satisfactory performance as a forward osmosis membrane, although the RSF/flux value will usually vary when the membrane undergoes structural change or compositional change. In some cases, therefore, it may not necessarily be proper to compare the physical durability of the forward osmosis membrane with the performance maintenance rate for the reference RSF/flux value.

From this viewpoint, for this embodiment it is more suitable to directly compare the RSF/flux value after application of the predetermined transmembrane pressure difference. A smaller RSF/flux value after application of the same transmembrane pressure difference is thought to indicate greater physical durability of the forward osmosis membrane and higher performance as a forward osmosis membrane, and hence higher practical utility.

A predetermined transmembrane pressure difference of 50 to 200 kPa, for example, may be applied for evaluation of the physical durability of the forward osmosis membrane. Specifically, forward osmosis treatment with stepwise 10 to 50 kPa increase in the transmembrane pressure difference, for example, and forward osmosis treatment under the reference conditions, may be repeated, obtaining the RSF/flux value after application of each transmembrane pressure difference.

In the forward osmosis membrane of the invention, the RSF/flux value after application of a transmembrane pressure difference of 200 kPa is preferably 0.25 g/kg or lower, more preferably 0.15 g/kg or lower, even more preferably 0.10 g/kg or lower, yet more preferably 0.08 g/kg or lower and most preferably 0.06 g/kg or lower.

[Forward osmosis membrane shape]

The forward osmosis membrane of the embodiment preferably has a hollow fiber shape. A hollow fiber forward osmosis membrane will have reduced defects in the separation functional layer, and will therefore tend to exhibit higher performance as a forward osmosis membrane. When the forward osmosis membrane of the embodiment is used in a modularized form, the forward osmosis membrane preferably consists of hollow fibers from the viewpoint of increasing the effective membrane area per volume of the module.

In a hollow fiber forward osmosis membrane, at least one of the separator layers is preferably on the inner surface of the hollow fiber support membrane to prevent physical damage to the separation functional layer.

[Draw solution]

The draw solution is a solution that exhibits higher osmotic pressure than the feed solution and functions to cause migration of the solvent from the feed solution across the forward osmosis membrane.

The draw solution exhibits high osmotic pressure by comprising the draw solute at high concentration.

Examples of draw solutes include alkali metal salts, alkaline earth metal salts, ammonium salts, sugars, monoalcohols, glycols and water-soluble polymers. Specific examples include:

alkali metal salts such as sodium chloride, potassium chloride, sodium sulfate, sodium thiosulfate and sodium sulfite;
alkaline earth metal salts such as magnesium chloride, calcium chloride and magnesium sulfate;
ammonium salts such as ammonium chloride, ammonium sulfate and ammonium carbonate;
sugars including common saccharides such as sucrose, fructose and glucose, and special saccharides such as oligosaccharides and rare sugars;
monoalcohols such as methanol, ethanol, 1-propanol and 2-propanol;
glycols such as ethylene glycol and propylene glycol; and
water-soluble polymers such as polyethylene oxide and polypropylene oxide, and copolymers of ethylene oxide and propylene oxide.

[Module]

The support membrane and forward osmosis membrane of the embodiment may be used as a module (support membrane module or forward osmosis membrane module) having a plurality of membranes housed in a housing. The form of the module is not particularly restricted. However, preferably the construction is such that a compartment where liquid contacts only with one surface side of the membrane and a compartment where liquid contacts only with the other surface side of the membrane, are separated by an adhesive resin that anchors the membrane to the module housing.

For an example in which the support membrane or forward osmosis membrane is a hollow fiber membrane, it is preferably a hollow fiber membrane module having a plurality of hollow fiber membranes housed in a housing, and having a partition where the solution contacts only with the inner surface sides of the hollow fiber membranes isolated from a partition where the solution contacts only with the outer surface sides of the membranes.

The size of the housing is not particularly specified. A cylindrical housing with a diameter of 5 to 500 mm and a length of 20 to 10,000 mm may be used, however. An adhesive such as a urethane or epoxy resin may be used as the adhesive resin.

Fig. 1 is a schematic cross-sectional view showing an example of the structure of a hollow fiber membrane module.

The hollow fiber membrane module (1) shown in Fig. 1 has a structure in which a fiber bundle consisting of a plurality of hollow fiber membranes (4) is packed into a tubular housing, and both ends of the hollow fiber bundle are anchored to the tube by adhesive-anchored sections (5, 6). The housing has outer conduits (2, 3) on the sides, and are closed off by headers (7, 8). The adhesive-anchored sections (5, 6) are each solidified so as to obstruct the hollow sections of the hollow fiber membranes. The headers (7, 8) have respective inner conduits (9, 10) which communicate with the insides (hollow sections) of the hollow fiber membranes (4) but do not communicate with the outsides. The inner conduits (9, 10) allow liquid to be introduced into the hollow fiber membranes (4) or removed from them. The outer conduits (2, 3) communicate with the outsides of the hollow fiber membranes (4) but do not communicate with the insides.

The hollow fiber membrane module (1) has a structure in which liquid flowing on the inside and liquid flowing on the outside contact only through the hollow fiber membranes (4).

[Membrane area]

According to the embodiment, the membrane area is the size of the region where the support membrane or forward osmosis membrane contacts with the feed solution to exhibit a separation function. That is, it represents the area of the section of the forward osmosis membrane that contacts with the feed solution or draw solution.

Specifically, in the case of a module of hollow fiber forward osmosis membranes where the feed solution is supplied to the inside, for example, the membrane area (the inner surface area of the hollow fiber forward osmosis membrane) is defined by the following mathematical formula (2), using the length, inner diameter and number of the hollow fiber forward osmosis membranes minus the adhesive-anchored sections in the module.

$$a = c \times \pi \times b \times n \quad (2)$$

In the formula, "a" is the inner surface area of the hollow fiber forward osmosis membrane ($m^2$), "b" is the length of the hollow fiber forward osmosis membrane minus the adhesive-anchored section (m), c is the inner diameter of the hollow fiber forward osmosis membrane (m) and n is the number of hollow fiber forward osmosis membranes.

This calculation of the inner surface area also applies for a hollow fiber support membrane module where the support membrane is a hollow fiber form.

The length of hollow fibers minus the adhesive-anchored sections in a modularized hollow fiber support membrane or hollow fiber forward osmosis membrane may also be referred to as the "effective length".

<Method for producing forward osmosis membrane>

The method for producing a forward osmosis membrane according to the embodiment includes a step of forming at least the separation functional layer, and it may also include a step of producing a support membrane by forming a porous support.

The step of forming the porous support preferably includes a step of adding a resin solution dissolving a resin in a good solvent into a coagulating bath comprising a non-solvent for the resin to coagulate the resin.

<Method for producing support membrane>

Methods for producing a hollow fiber support membrane and a flat support membrane will now be described in order.

Method for producing hollow fiber support membrane]

A hollow fiber support membrane consisting entirely of a hollow fiber porous support (a hollow fiber membrane) that is preferred according to the embodiment can be produced using a material selected from among the thermoplastic resins mentioned above, using a publicly known dry-wet film-forming method, melt film-forming method or wet film-forming method. Production by the following method is preferred.

A method for producing a hollow fiber membrane which includes:

discharging a spinning stock solution from an external fluid channel of a double-tube nozzle, and an internal coagulating solution from an internal fluid channel of a double-tube nozzle;

immersing and coagulating the spinning stock solution flowed out from the external fluid channel of a double-tube nozzle in the external coagulating bath through a free-running section; and

taking up the spinning stock solution while applying tension to the coagulated spinning stock solution,

wherein the spinning stock solution includes a resin (polymer) and a solvent, and

the temperature of the spinning stock solution discharged from the double-tube nozzle is higher than the temperature of the internal coagulating solution, the temperature difference between the two solutions being 5°C or higher and lower than 35°C.

The hollow fiber membrane that has been taken up onto a winder may be cut to a predetermined length.

(Spinning stock solution)

The spinning stock solution is a solution containing a resin (polymer) and a solvent, preferably with the resin dissolved in a good solvent.

The solvent (good solvent) in the spinning stock solution in this method is preferably an aprotic polar organic solvent such as N-methyl-2-pyrrolidone, dimethyl acetamide or dimethylformamide. The spinning stock solution may also comprise a non-solvent for the resin. A non-solvent in the spinning stock solution may be a glycol such as polyethylene glycol or polypropylene glycol, or an electrolyte or polyvinylpyrrolidone. Glycols are preferred among these for their satisfactory spinning properties, and to produce a membrane of satisfactory quality. The content ratio of the non-solvent in the spinning stock solution is preferably set so that the mass ratio: non-solvent/(good solvent + non-solvent) is a value in the range of 50 to 90%, as the compatibility limit mass ratio. The compatibility limit is the point at which the polymer solution undergoes phase separation instead of being a homogeneous solution. As the compatibility limit is generally a temperature function, the content ratio of the non-solvent must be set based on the compatibility limit at the spinning temperature.

If the mass ratio non-solvent/(good solvent + non-solvent) is less than 50% of the mass ratio for the compatibility limit, the viscosity of the spinning stock solution will be too low, impairing the spinning property. If the value is higher than 90%, on the other hand, it may be more difficult to control the cross-sectional shape of the hollow fiber support membrane.

For the same reason, the temperature of the spinning stock solution during formation of the hollow fiber porous support is preferably 30 to 80°C and more preferably 35 to 60°C.

The polymer concentration in the spinning stock solution is preferably 10 to 30 mass% and more preferably 15 to 25 mass%. The polymer concentration in the spinning stock solution is related to the strength of the obtained hollow fiber support membrane, in particular. If the polymer concentration in the spinning stock solution is within this range it will be possible to obtain a hollow fiber support membrane with excellent film strength.

After the spinning stock solution has been stirred for 24 hours or longer at a predetermined temperature during preparation of the spinning stock solution, it may be subjected to reduced-pressure defoaming.

(Internal coagulating solution)

During film formation for the hollow fiber porous support, a dual spinneret is used as mentioned above to discharge the spinning stock solution from a cylindrical opening on the outside (external fluid channel) and to discharge the internal coagulating solution from an inner opening (internal fluid channel).

Examples for the internal coagulating solution include aqueous solutions with water as the main component and including one or more additives selected from among alcohols, ethylene glycols and amide-based solvents.

Examples of alcohols include methanol, ethanol and isopropyl alcohol. Examples of ethylene glycols include triethylene glycol, tetraethylene glycol and glycerol. Examples of such amide-based solvents include N-methyl-2-pyrrolidone, N,N-dimethyl acetamide and N,N-dimethylformamide.

By adding such additives to the internal coagulating solution it is possible to control the rate of coagulation and to easily obtain a porous support with the desired structure. For example, adding additives to the internal coagulating solution can delay coagulation and further disperse the pore sizes on the front side. If too much of an additive is added to the internal coagulating solution, however, the spinning stability may be impaired or the surface pore sizes may become coarser, hampering formation of the separation functional layer.

Using water or a mixture of water and a small amount of additive as the internal coagulating solution is preferred for variability in spinning stability and membrane performance. When adding a glycol, for example, as an additive to the internal coagulating solution, the amount added is preferably 60 mass% or lower, more preferably 40 mass% or lower, even more preferably 20 mass% or lower, yet more preferably 10 mass% or lower and most preferably 5 mass% or lower, with respect to the total mass of the solvent in the internal coagulating solution. If the value is greater than 60 mass%, it will be difficult to maintain balance in the sizes of the pores on the interior and exterior surfaces of the obtained hollow fiber membrane, with the pores on the inner surface being especially prone to coarseness.

Water is most preferred for use as the internal coagulating solution from the viewpoint of forming macro-voids near the surface of the porous support while allowing formation of the dense layer to a suitable thickness.

The internal coagulating solution is preferably supplied to spinning after having been adjusted to a suitable temperature.

If the internal coagulating solution temperature is too high, the dense layer on the inner surface side of the hollow fiber membrane will be too thin, and the structure near the inner surface will tend to be non-homogeneous. If the internal coagulating solution temperature is too low, on the other hand, the dense layer may be too thick on the inner surface side of the hollow fiber membrane. If the dense layer is excessively thick, supply of the monomer may be insufficient during formation of the separation functional layer of the forward osmosis membrane, potentially lowering the performance of the forward osmosis membrane, or the water permeability as a forward osmosis membrane may be lowered due to resistance of the dense layer.

From this viewpoint, the internal coagulating solution temperature is preferably 5 to 50°C, more preferably 10 to 40°C and even more preferably 15 to 35°C.

In order to appropriately control the structure on the inner surface side of the hollow fiber support membrane, it is preferred to set the spinning stock solution temperature to be higher than the temperature of the internal coagulating solution. The spinning stock solution temperature is set to more preferably 30 to 80°C and even more preferably 35 to 60°C, and the internal coagulating solution temperature is set to 5 to 50°C and more preferably 10 to 35°C, while the temperature difference between the spinning stock solution and the internal coagulating solution is set to preferably 5°C or higher and lower than 35°C, more preferably 5 to 33°C and even more preferably 5 to 30°C. Setting such a temperature range will facilitate control of the structure on the inner surface side of the hollow fiber membrane and help to produce a uniform structure, while also tending to provide high spinning stability.

The above ranges are merely examples for setting of the temperature and may be adjusted as appropriate depending on the composition of each solution.

By setting the spinning stock solution temperature and the external coagulating solution temperature to appropriate ranges it is possible to control the structure on the outer surface for a hollow fiber membrane, or the surface for a flat membrane. However, the outer surface of a hollow fiber membrane and the surface of a flat membrane are highly susceptible to the effects of temperature increase of the spinning stock solution during continuous production, changes in the composition of the external coagulating solution, and the temperature and humidity of the atmosphere. From the viewpoint of homogeneity of the front side structure and of facilitating production, therefore, control the structure of the inner surface of the hollow fiber membrane is easier and preferred.

The internal coagulating solution for production of the hollow fiber membrane has a low flow volume and small liquid volume compared to the coagulating bath. An internal coagulating solution set to the predetermined temperature therefore allows lowering of the temperature only on the surface layer portions of the inner surface of the hollow fiber membrane. It is therefore possible to thicken only the surface layer part of the hollow fiber membrane, promoting phase separation before excessive growth of macro-voids, and forming a dense layer..

The temperature difference between the spinning stock solution and the internal coagulating solution can also be appropriately set to control the thickness of the dense layer on the inner surface of the hollow fiber membrane. In other words, increasing the temperature difference between the two solutions increases the thickness of the low-temperature region on the inner surface of the hollow fiber membrane, resulting in a thicker dense layer. Decreasing the temperature difference between the two solutions, on the other hand, reduces the thickness of the low-temperature region on the inner surface of the hollow fiber membrane, resulting in a thinner dense layer. In either case, the viscosity is relatively lower in the region on the inner side from the surface layer where the temperature is lower, allowing macrovoid growth to be faster than coagulation, so that the macro-void layer is formed.

Thus, controlling the surface structure on the inner side of the hollow fiber membrane is more preferable from the standpoint of more easily obtaining the desired membrane structure.

(External coagulating solution)

The spinning stock solution discharged from the spinneret becomes immersed in the external coagulating bath through a free-running section, and is coagulated.

The external coagulating solution used as the coagulating bath may be one or more selected from among water, any of the aforementioned non-solvents as additives for the internal coagulating solution, and other organic solvents.

The external coagulating solution may be a liquid with the same composition as the internal coagulating solution, or it may have a different composition.

The external coagulating solution is preferably water or a mixture of water and one of the non-solvents mentioned above as additives for the internal coagulating solution.

When the external coagulating solution used is a mixture of water and an alcohol, ethylene glycol or amide-based solvent, the amount of additive selected from among alcohols, ethylene glycols and amide-based solvents is preferably 40 mass% or lower, more preferably 30 mass% or lower, even more preferably 15 mass% or lower and most preferably 5 mass% or lower, with respect to the total mass of the external coagulating solution. The amount of an additive in the external coagulating solution is preferably within this range, because coagulation on the outer surface sides of the hollow fibers will proceed adequately, tending to form macro-voids of satisfactory size, and the hollow fiber membrane will have a homogeneous form.

The external coagulating solution is most preferably water. The solvent of the spinning stock solution that leaks out from the hollow fiber membrane contaminates the external coagulating solution during spinning. If the composition of the external coagulating solution is to be kept within a fixed range, therefore, it is necessary to replace with fresh external coagulating solution. Using water as the external coagulating solution is especially preferred since it will then be sufficient to pour in water, thus facilitating control of the external coagulating solution composition.

The temperature of the coagulating bath is preferably 10 to 60°C, more preferably 20 to 50°C and even more preferably 25 to 40°C.

If the coagulating bath temperature is high the structure of the obtained hollow fiber support membrane will tend to be sparser, with a tendency toward higher water permeability of the hollow fiber support membrane and consequently higher water permeability of the forward osmosis membrane. If the coagulating bath temperature is too high, the inner and outer structure of the hollow fiber support membrane will be more easily disturbed due to thermal vibration. This will lower uniformity of the structure including the surface of the hollow fiber support membrane, resulting in insufficiency when chemical solution passes through during the separation functional layer forming step, and increasing reverse salt diffusion of the forward osmosis membrane in some cases.

If the coagulating bath temperature is low, on the other hand, the structure of the support membrane will tend to be denser, which will tend to lower the water permeability of the support membrane and forward osmosis membrane. A lower coagulating bath temperature will increase the spinning stability and will tend to result in a more uniform structure for the obtained hollow fiber membrane.

According to this embodiment, the coagulating bath temperature is preferably lower than the spinning stock solution temperature.

The difference between the coagulating bath temperature and the spinning stock solution temperature is preferably 40°C or lower and more preferably 3°C or higher and 40°C or lower.

If the temperature difference between the spinning stock solution and coagulating solution is too large, or the coagulating bath temperature is higher than the spinning stock solution temperature, the structure near the outer surface of the hollow fiber membrane will be nonuniform, lowering the performance as a forward osmosis membrane and resulting in lower physical durability, such as making the separation functional layer prone to partial detachment.

(Free-running section)

The spinning stock solution discharged from the spinneret reaches the coagulating bath after having passed through a free-running section having a fixed run distance. The run distance from the spinneret to the coagulating bath should be adjusted as appropriate depending on the spinning conditions and the spinneret size. From the viewpoint of the hollow fiber support membrane structure and uniformity of the pore sizes on the surface, however, the run distance is preferably 100 to 500 mm and more preferably 200 to 400 mm. Setting an appropriate run distance will result in suitable sparseness of the outer surface structure, in particular, and will stabilize the overall structure of the hollow fiber support membrane. When the separation functional layer is formed on the inner sides of the hollow fibers to form the forward osmosis membrane, the draw solution will thoroughly diffuse through the separation functional layer, thus tending to increase the water permeability of the forward osmosis membrane.

By appropriately controlling the temperature and humidity of the free-running section as well it is possible to obtain hollow fibers with even greater structural homogeneity. From this viewpoint, the temperature of the free-running section is preferably 15 to 50°C and more preferably 25 to 40°C. From the viewpoint of producing a suitably sparse outer surface structure while helping to stabilize the overall structure of the hollow fiber support membrane, the humidity of the free-running section is preferably 40 to 100%, more preferably 70 to 100% and even more preferably 90 to 100%, as relative humidity.

(Take-up)

The tension of the hollow fiber membrane during take-up can be adjusted by the discharge rate of the spinning stock solution, the take-up speed, and the types and number of turn rolls.

The tension of the hollow fiber membrane during take-up is preferably set as appropriate in consideration of the spinning stock solution composition.

For this embodiment, the tension during take-up (units: g) is the value measured using a tensiometer on both sides of the hollow fiber membrane while it runs.

From the viewpoint of avoiding yarn breakage, the tension of the hollow fiber membrane during take-up is preferably 4 to 60 g, more preferably 10 g or greater and less than 40 g, and even more preferably 10 to 38 g. The tension during take-up is preferably 5 g or greater as this will allow stable spinning without causing waviness or sagging of the hollow fiber membrane during take-up, and will reduce variation in the structure and physical properties of the obtained hollow fiber membrane. If the tension during take-up is less than 40 g, it will be possible to reduce strain at the thickness centers of the hollow fibers and to increase the compressive strength. The tension during take-up is most preferably 10 g or greater and 35 g or lower. The tension is preferably kept within this range while adjusting the temperature and humidity of the spinning stock solution, the free-running section, the internal coagulating solution and the external coagulating solution to suitable ranges, in order to obtain spinning stability and to increase uniformity of the hollow fiber membrane surface structure.

[Method for producing flat support membrane]

The flat support membrane can be produced by the following methods, for example, using any of the resin solutions mentioned above for use in production of the hollow fiber support membrane.

A flat support membrane comprising a base material and porous support can be obtained, for example, by:

a method of coating a resin solution onto a base material and then immersing it in a coagulating solution (such as water) for coagulation;
a method of immersing a base material in a resin solution and then immersing it in a coagulating solution (such as water) for coagulation; or
a method of extruding a base material and resin solution into a coagulating solution through a slit-shaped nozzle, for coagulation.

A flat support membrane consisting entirely of a porous support can be obtained, for example, by coating a resin solution onto a glass board and immersing it in a coagulating solution for coagulation, and then releasing the coagulated support membrane from the glass board.

The film-forming conditions, such as the composition of the resin solution and the composition of the coagulating solution, may be set as appropriate by a person skilled in the art in consideration of publicly known technology, and the method for producing the hollow fiber support membrane described above.

The flat membrane of the embodiment is more preferably a support membrane consisting entirely of the porous support.

[Heat treatment]

The support membrane obtained as described above may be subjected to heat treatment.

Heat treatment of the support membrane may be carried out in the same manner as heat treatment of the forward osmosis membrane after formation of the separation functional layer as described above, or by the same method with appropriate modifications made by a person skilled in the art.

[Separation functional layer forming step]

A forward osmosis membrane can be obtained by forming a separation functional layer on a support membrane obtained in the manner explained above.

The following is an example of a method of forming a separation functional layer composed mainly of polyamide on a support membrane.

The separation functional layer composed mainly of polyamide may be formed by using a water-soluble solution comprising a polyfunctional amine and an organic solvent solution comprising a polyfunctional acid halide, for interfacial polycondensation on the surface of the porous support.

A preferred example of a method for forming the separation functional layer for this embodiment is a method in which a first solution comprising either a polyfunctional amine or a polyfunctional acid halide, and a second solution comprising the other, are passed over the support membrane in that order. A method in which both the polyfunctional amine and the polyfunctional acid halide are in the same solution is not preferred.

According to the embodiment, the polyfunctional amine may be present in the first solution and the polyfunctional acid halide may be present in the second solution, for example.

[Polyfunctional amine]

A polyfunctional amine is an amine having two or more of either or both a primary amino and secondary amino group in the molecule, with at least one of the amino groups being a primary amino group. Examples include aromatic polyfunctional amines such as o-phenylenediamine, m-phenylenediamine, p-phenylenediamine, o-xylylenediamine, m-xylylenediamine, p-xylylenediamine, 1,3,5-triaminobenzene, 1,2,4-triaminobenzene, 3,5-diaminobenzoic acid, 3-aminobenzylamine and 4-aminobenzylamine; aliphatic amines such as ethylenediamine and propylenediamine; and alicyclic polyfunctional amines such as 1,2-diaminocyclohexane, 1,4-diaminocyclohexane, 4-aminopiperidine and 4-aminoethylpiperazine. Preferred among these are aromatic polyfunctional amines having 2 to 4 of either or both a primary amino and secondary amino group in the molecule, from the standpoint of separation performance, water permeation resistance and heat resistance. As such polyfunctional aromatic amines it is preferred to use m-phenylenediamine, p-phenylenediamine or 1,3,5-triaminobenzene. From the viewpoint of greater availability and easier handling, it is more preferred to use m-phenylenediamine. These polyfunctional amines may be used alone or in mixtures of two or more. When a mixture of two or more polyfunctional amines is used, it may be a combination of the amines mentioned above, or a combination of any such amine with an amine having at least two secondary amino groups in the molecule. Examples of amines having at least two secondary amino groups in the molecule include piperazine and 1,3-bispiperidylpropane.

[Polyfunctional acid halide]

A polyfunctional acid halide is an acid halide having at least two carbonyl halide groups in the molecule. Examples include:

trifunctional acid halides, including trimesoyl chloride, 1,3,5-cyclohexanetricarboxylic acid trichloride and 1,2,4-cyclobutanetricarboxylic acid trichloride, and

bifunctional acid halides, including aromatic bifunctional acid halides such as biphenyldicarboxylic acid dichloride, azobenzenedicarboxylic acid dichloride, terephthaloyl chloride, isophthaloyl chloride and naphthalenedicarboxyloyl chloride; aliphatic bifunctional acid halides such as adipoyl chloride and sebacoyl chloride; and alicyclic bifunctional acid halides such as cyclopentanedicarboxylic acid dichloride, cyclohexanedicarboxylic acid dichloride and tetrahydrofurandicarboxylic acid dichloride.

From the viewpoint of reactivity with the polyfunctional amine, the polyfunctional acid halide is preferably a polyfunctional acid chloride. From the viewpoint of separation performance and heat resistance of the obtained forward osmosis membrane, the polyfunctional acid chloride is more preferably a polyfunctional aromatic acid chloride having 2 to 4 carbonyl chloride groups in the molecule. Trimesoyl chloride is particularly preferred for use from the viewpoint of availability and easier handling.

These polyfunctional acid halides may be used alone or in mixtures of two or more.

[Solvent and monomer solution concentration]

The polyfunctional amine and polyfunctional acid halide are each dissolved in an appropriate solvent and fed to interfacial polycondensation as the first solution or second solution.

The solvents for the first solution and second solution are preferably solvents that dissolve the respective monomers and are not mutually miscible, forming a solution-solution interface where they mutually contact, and also do not destroy the support membrane. They are also preferably inert with respect to the polyfunctional amine compound and polyfunctional acid halide.

Examples of such solvents include the following.

Solvents for the polyfunctional amine include one or more selected from among water and alcohols. Solvents for the polyfunctional acid halide include one or more selected from among hydrocarbon-based solvents such as n-hexane, cyclohexane, n-heptane, n-octane, n-nonane and n-decane.

By selecting the respective solvents for the polyfunctional amine and polyfunctional acid halide from among those mentioned above, the polyfunctional amine solution and polyfunctional acid halide solutions will be immiscible, promoting interfacial polycondensation reaction and yielding a thin-film of the macromolecular polymer (polyamide). The composition and concentration of each solution is to be set according to the type of monomer and the distribution coefficient in the solvent, and therefore is not particularly restricted, instead being set as appropriate for the desired separation function.

For example, when an aqueous solution of *m*-phenylenediamine is used as the polyfunctional amine solution and an *n*-hexane solution of trimesoyl chloride is used as the polyfunctional acid halide solution, assuming interfacial polycondensation, then the suitable monomer concentrations are as follows:

The *m*-phenylenediamine concentration is preferably 0.1 to 10 mass% and more preferably 0.5 to 5.0 mass%. The trimesoyl chloride concentration is preferably 0.01 to 10 mass% and more preferably 0.04 to 2.0 mass%. If the solution concentrations are too low, formation of the polyamide separation functional layer by interfacial polycondensation will tend to be incomplete with a tendency toward defects, and the separation performance as a forward osmosis membrane will also tend to be low. If the solution concentrations are too high, on the other hand, the polyamide separation functional layer that is formed will be too thick, leading to lower water permeability and also increased residual unreacted substances in the separation functional layer, and potentially producing an adverse effect on performance as a forward osmosis membrane.

[Polymerization additives]

The polyfunctional amine solution or polyfunctional acid halide solution may also include polymerization additives such as surfactants, organic solvents (excluding the organic solvent in the polyfunctional acid halide solution), organic acid salts, basic compounds and antioxidants, so long as they do not significantly interfere with reaction between the polyfunctional amine and polyfunctional acid halide.

Surfactants have an effect of improving wettability of the porous support surface and lowering interfacial tension between the amine solution and nonpolar solvent. Organic solvents may act as catalysts for interfacial polycondensation reaction, and therefore addition of an organic solvent may further increase efficiency of the interfacial polycondensation reaction. An organic acid salt can alter the wettability of the support surface, and may thus provide improved film formability and increased separation performance for the forward osmosis membrane. A basic compound can remove hydrogen halides generated by polymerization, and may thus promote polymerization.

Examples of polymerization additives include surfactants such as sodium dodecylbenzenesulfonate, sodium dodecylsulfate and sodium laurylsulfate; organic solvents such as ethanol, isopropanol, N,N-dimethylformamide and ε-caprolactam; organic acid salts comprising amines such as triethylamine and organic acids such as camphorsulfonic acid; basic compounds such as sodium hydroxide, trisodium phosphate and triethylamine; phenol-based antioxidants, amine-based antioxidants, sulfur-based antioxidants, phosphorus-based antioxidants and acylation catalysts.

For this embodiment it is especially preferred to carry out heat treatment (curing) after having formed the macromolecular polymer thin-film by interfacial polycondensation. It is thought that such heat treatment organizes the higher-order structure of the macromolecular polymer thin-film and increases the crosslink density, thus improving the physical durability and solvent resistance of the macromolecular polymer thin-film while lowering reverse salt diffusion of the forward osmosis membrane. In other words, heat treatment of the forward osmosis membrane by an appropriate method is thought to allow formation of a forward osmosis membrane with reduced partial functional defects in the separation functional layer.

In the method for producing a forward osmosis membrane of the embodiment, a support membrane is formed having a porous support with a dense layer and macro-void layer in a specific structure, preferably being subjected to heat treatment after the separation functional layer has been formed on the dense layer. The heat treatment is more preferably carried out in a wetted state.

The heat treatment in a wetted state may be permeation of a moist gas having increased temperature after passing through a heat source (for example, moisture-containing nitrogen or air), permeation of hot water, permeation of steam or exposure to steam.

Here, the term "permeation" means treatment whereby a fluid is supplied to the forward osmosis membrane, contacting the fluid with the separation functional layer and support membrane of the forward osmosis membrane. A preferred method of permeation may be, for a forward osmosis membrane using a hollow fiber support membrane consisting entirely of the porous support, for example, supplying the fluid to the inner side or outer side of the hollow fibers, or both, to contact the fluid with the front side, back side and inside of the separation functional layer, and inside the pores of the support membrane.

When heat treatment is to be carried out in a dry state, the forward osmosis membrane may become excessively dried, potentially causing shrinkage of the pores of the support membrane or deformation of the support membrane. Shrinkage of the pores of the support membrane can also lower the water permeability of the obtained forward osmosis membrane. Deformation of the support membrane induces deformation of the separation functional layer, which can lower the salt-blocking performance of the separation functional layer and increase reverse salt diffusion. When heat treatment is carried out in a dry state, therefore, the heat treatment time is preferably 15 minutes or less from the viewpoint of avoiding excess drying of the forward osmosis membrane.

The term "heat treatment" for the purpose of the embodiment is treatment whereby the treated object is heated at a temperature of 50°C or higher, and preferably a temperature of 70°C or higher.

The heat treatment of this embodiment is more effective if the coefficient of variation in the thickness of the separation functional layer of the forward osmosis membrane is within the range specified above. If the coefficient of variation in the thickness of the separation functional layer is within this range, it will be possible to achieve enhanced performance for the separation functional layer as a whole by the predetermined heat treatment, so that even if partial separation function defects are present their increase can be prevented.

The heat treatment of the embodiment may be by a method of supplying hot water to the forward osmosis membrane after formation of the separation functional layer, a method of immersing the forward osmosis membrane in hot water after formation of the separation functional layer, or a method of causing absorption of high-temperature steam into the forward osmosis membrane. A method of supplying hot water to the forward osmosis membrane after formation of the separation functional layer or a method of causing absorption of high-temperature steam into the forward osmosis membrane is preferred.

Hot water is preferably supplied onto at least the separation functional layer side of the forward osmosis membrane. This method is especially preferred since heat will propagate evenly throughout the separation functional layer and residual monomer in the support membrane will be washed out, helping to inhibit unwanted reactions during the heat treatment.

The hot water temperature is preferably 50 to 100°C and more preferably 70 to 95°C. Such a method of heat treatment is desirable from the viewpoint of efficiently transmitting heat of the hot water into the separation functional layer and accelerating crosslinking reaction of the macromolecular polymer thin-film that is to compose the separation functional layer.

The hot water supply time is preferably 5 minutes to 2 hours. If the hot water supply time is 5 minutes or longer, crosslinking reaction and structural change in the separation functional layer will proceed in a satisfactory manner. However, since supplying hot water for longer than 2 hours does not increase the effect of heat treatment in proportion to the hot water supply time, the hot water supply time is preferably 2 hours or less.

The "high-temperature steam" for heat treatment by the method of supplying high-temperature steam to the forward osmosis membrane is water in a gaseous state at 100°C or higher, especially under high-pressure conditions. Such high-temperature steam can be generated in a pressure vessel such as an autoclave which is commonly used for high-pressure steam sterilization. The temperature of the high-temperature steam is preferably 100 to 160°C and more preferably 100 to 140°C. The temperature of the high-temperature steam is preferably in this range from the viewpoint of accelerating crosslinking reaction of the macromolecular polymer thin-film forming the separation functional layer, and of preventing notable damage to the support membrane or separation functional layer, or both, and significantly reducing reverse salt diffusion of the forward osmosis membrane as a result.

The time for which the high-temperature steam is supplied to the forward osmosis membrane is preferably 1 minute to 4 hours. If the supply time is 1 minute or longer, crosslinking reaction will proceed in a satisfactory manner. Supplying high-temperature steam for longer than 4 hours does not increase the effect of heat treatment in proportion to the high-temperature steam supply time, and therefore the steam supply time is preferably 4 hours or less.

The heat treatment for this embodiment may be one type of heat treatment alone, or it may be a combination of two or more types of heat treatment, or repetition of the same treatment several times.

When a separation functional layer composed of a polymer thin-film is to be formed on the support membrane, the aforementioned effect is exhibited more notably if either or both the first monomer and second monomer include a monomer with three or more reactive groups, and the three-dimensional macromolecular polymer thin-film formed by them is subjected to heat treatment in a wetted state as described above. This is particularly preferred since the strength and durability of the forward osmosis membrane will increase, and reverse salt diffusion of the forward osmosis will be further reduced.

EXAMPLES

The present invention will now be explained in greater detail using Examples and Comparative Examples. However, it is to be understood that the invention is not limited in any way by these Examples.

The procedure was carried out at 25°C, unless otherwise specified.

[Measurement of dense layer thickness and void sizes and number]

The thickness of the dense layer of the porous support in the support membrane, and the sizes and number of voids, were measured by observing 9 electron microscope layers (cross-sectional images) obtained from the forward osmosis membrane.

In the case of a hollow fiber forward osmosis membrane, 9 samples were obtained, taking one forward osmosis membrane each from 3 locations: the outer periphery, the middle and the center section in the radial direction of the forward osmosis membrane module (total of 3), and dividing each into 3 equal parts in the lengthwise direction. A vertical cross-section was obtained in the in-plane direction (lengthwise direction) of the membrane at the center section of each sample, and the obtained cross-section was observed.

For a flat forward osmosis membrane, samples were obtained at 9 locations, dividing the forward osmosis membrane into 9 portions with 3 equal portions on each side. A cross-section was observed from the center section of each sample and the obtained cross-section was observed.

In either case, whether with a hollow fiber forward osmosis membrane or with a flat forward osmosis membrane, the measured value was calculated as the average value for 9 samples.

Each sample was photographed near the interface of contact between the porous support and separation functional layer using a scanning electron microscope, and the obtained image (cross-sectional image) was analyzed, identifying the dense layer of the porous support in the support membrane and the macro-void layer, to determine the sizes of the voids in the macro-void layer.

For this Example, the thickness of the dense layer of the support membrane, and the sizes and number of voids, were measured after formation of the forward osmosis membrane. The measured values for the support membrane alone were also confirmed to be the same, within the margin of error.

The cross-sectional image of each sample was obtained in the following manner.

The sample in a specialized glass container was immersed in purified water and frozen with liquid nitrogen, after which it was dried by a freeze-drying method. Using the dried sample in Broad Ion Beam (BIB) processing (processing apparatus: E-3500, Hitachi High-Technologies Corp.), a cross-section perpendicular to the in-plane direction of the membrane was prepared, thinly coated with osmium, and used as an observation sample. A scanning electron microscope (S-4800, Hitachi High-Technologies Corp.) was used to photograph the observation sample under the following conditions.

Acceleration voltage: 1.0 kV
Emission current: 10 $\mu$A
Probe current: Normal
Detector: Upper
Magnification: 5,000x
Pixel count 1280 $\times$ 960
Working distance: 5.0 mm

The observation field was set so that a region with a width of 25 $\mu$m in the in-plane direction of the sample membrane fit inside the visual field. The cross-sectional image was taken as an 8-bit grayscale image under conditions without brightness saturation and with maximum contrast.

The thickness of the dense layer of the porous support and the sizes of the voids in the obtained cross-sectional image were directly measured on a scale.

To determine the contact interface between the porous support and separation functional layer of the forward osmosis membrane, the image was loaded into ImageJ (developer: U.S. National Institutes of Health) and binarized by Otsu's method, after which the average brightness in the horizontal direction of the membrane surface was calculated and the average brightness was consecutively compared from the surface toward the support membrane side of the separation functional layer, determining the horizontal direction of the section with the highest average brightness to be the contact interface between the porous support and separation functional layer of the forward osmosis membrane.

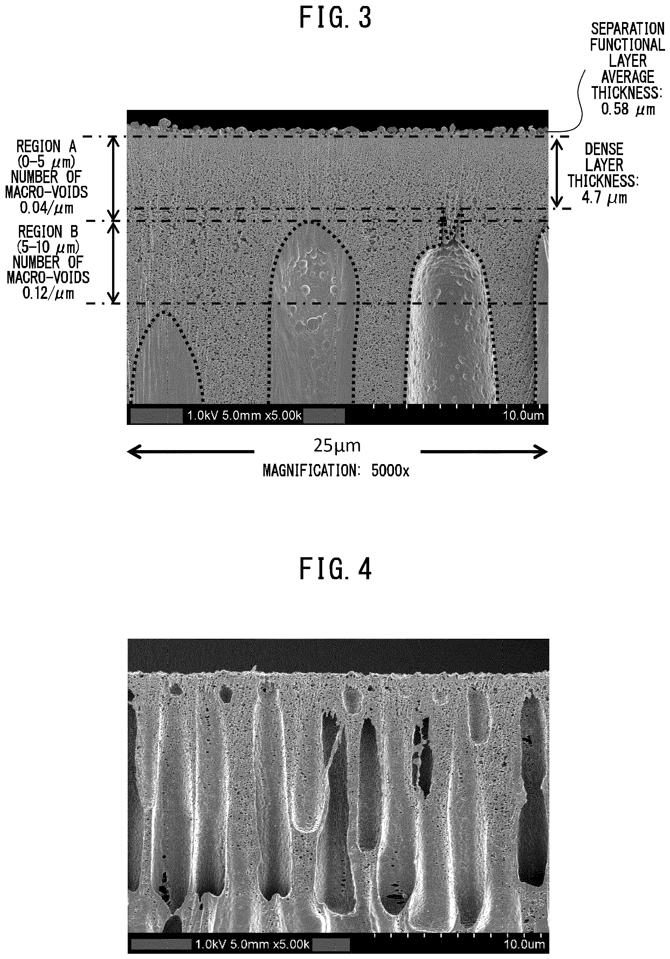

As an example of measuring a cross-sectional image, Fig. 2 and Fig. 3 show cross-sectional images of an observation sample prepared from the center section in the lengthwise direction of a hollow fiber forward osmosis membrane sampled from the middle part in the radial direction of the forward osmosis membrane module of Example 1. Fig. 2 is an electron microscope image, and Fig. 3 is an image with auxiliary lines added to Fig. 2.

As seen in Fig. 2 and Fig. 3, four macro-voids with long diameters of 1 $\mu$m or greater were found in the entire cross-sectional image. The dense layer is the portion from the support membrane surface (the interface between the separation functional layer and dense layer) up to the shallowest location of macro-voids, and its thickness was 4.7 $\mu$m. One macro-void was found in region A of the cross-section (the region from the interface between the separation functional layer and dense layer to a depth of 0 to 5 $\mu$m). Therefore, the macro-void ratio in region A of the cross-section was 0.04/$\mu$m.

Three macro-voids were found in region B (the region from the interface between the separation functional layer and dense layer to a depth of 5.0 to 10.0 $\mu$m). Since the observation field width was 25 $\mu$m, the macro-void ratio in region B of the cross-section was calculated to be 0.12/$\mu$m (3/25 $\mu$m).

The calculation was made for images of 9 visual fields, and the average was calculated as the thickness and macro-void ratio of the dense layer.

[Measurement of average thickness of separation functional layer, and its coefficient of variation]

The average thickness of the separation functional layer and its coefficient of variation were measured using the same 9 samples used for [Measurement of dense layer thickness and void sizes and number], with 9 electron microscope layers (cross-sectional images) obtained by the method of [Measurement of dense layer thickness and void sizes and number], except that the magnification was 10,000x and the visual field was set so that a width of 13 μm in the in-plane direction of the sample membrane fit inside the visual field.

First, the outline of the separation functional layer in each cross-sectional view was extracted by the method described below. The obtained cross-sectional image was loaded into image processing software (ImageJ, developer: U.S. National Institutes of Health) and binarized by Otsu's method. Using the obtained binarized image, the average brightness in the horizontal direction of the membrane surface was calculated and the average brightness was consecutively compared from the surface toward the support membrane side of the separation functional layer, determining the horizontal direction of the section with the highest average brightness to be the contact interface (outline) between the porous support and separation functional layer of the forward osmosis membrane. A curve obtained by connecting the sections with differing contrast from the background by continuous lines in the obtained binarized image was used as the outline on the surface of the separation functional layer. The outlines in the thickness direction were considered to be both edges of the obtained image. By connecting the lines it was possible to extract the outline of the separation functional layer. The interior of the obtained outline was filled in and the area of the separation functional layer was calculated, converting to average thickness for each separation functional layer in a single image against a previously drawn calibration curve.

The average of the 9 measured values was used as the average thickness for the separation functional layer for each of the Examples and Comparative Examples, and the coefficient of variation was calculated.

[Evaluation of forward osmosis performance and resistance to applied transmembrane pressure difference]

The effect of the pressure difference applied between membranes on the forward osmosis performance was examined.

First, for the forward osmosis membranes obtained in the Examples and Comparative Examples, the water permeability (flux) and reverse salt diffusion (RSF) were determined after forward osmosis operation under the following conditions, and the salt permeability (RSF/flux) was calculated.

Feed solution: purified water, 25°C, membrane surface linear speed: 3 cm/sec
Draw solution: 3.5 mass% aqueous sodium chloride solution, 25°C, membrane surface linear speed: 3 cm/sec
Transmembrane pressure difference: 20 kPa
Operation time: 1 hour

Forward osmosis operation was carried out while adding a saturated aqueous sodium chloride solution to the draw solution to maintain a fixed concentration of the draw solution.

The transmembrane pressure difference was set by operating the back pressure valve on the draw solution side so that the draw solution side (support membrane side of the forward osmosis membrane) was positive (high pressure).

The salt permeability (RSF/flux) obtained by the measurement was used as the reference salt permeability value.

After completion of the measurement and washing the forward osmosis membrane with water for 2 hours, forward osmosis treatment was repeated under the same conditions but with the transmembrane pressure difference changed to 50 kPa. Next, the forward osmosis membrane was again washed with water, forward osmosis treatment was repeated under the same conditions but with the transmembrane pressure difference restored to 20 kPa, the water permeability (flux) and reverse salt diffusion (RSF) were determined, and the salt permeability (RSF/flux) was calculated. The value was recorded as the salt permeability value after operation at 50 kPa.

After completion of the measurement, the forward osmosis membrane was again washed with water, and forward osmosis treatment was repeated under the same conditions but with the transmembrane pressure difference changed to 100 kPa, and after restoring the transmembrane pressure difference to 20 kPa and further operation, the water permeability (flux) and reverse salt diffusion (RSF) were determined and the salt permeability value after operation at 100 kPa was calculated.

Forward osmosis operation was carried out while increasing the transmembrane pressure difference to 200 kPa in successive increments of 50 kPa, with intervals of operation at a transmembrane pressure difference of 20 kPa between them. After each transmembrane pressure difference increase, the salt permeability value was determined after the operation with a transmembrane pressure difference of 20 kPa.

Table 3 shows the reference salt permeability values, the salt permeability values after application of 100 kPa and after application of 200 kPa, and the performance maintenance rates. The performance maintenance rates were the value of each reference salt permeability value divided by the salt permeability value after application of each transmembrane pressure difference, expressed as a percentage.

[Dimensions of support membrane]

The dimensions of the support membrane were measured as the inner diameter, outer diameter and film thickness, for a hollow fiber support membrane, or the film thickness, for a flat support membrane.

For a hollow fiber support membrane, measurement was carried out using an optical microscope photograph (cross-sectional image) of a cross-section obtained by cutting on a plane perpendicular to the film in-plane direction (lengthwise direction). The outer diameter and inner diameter of the cross-sectional image were measured using a scale. The difference between the outer diameter and inner diameter was divided by 2 to calculate the film thickness. The outer diameter and inner diameter referred to here are the hollow fiber outer diameter and inner diameter, respectively.

For a flat support membrane, measurement was carried out using an optical microscope photograph (cross-sectional image) of a cross-section obtained by cutting on a plane perpendicular to the film in-plane direction. The film thickness of the cross-sectional image was measured using a scale.

For these Examples, the inner diameter, outer diameter and film thickness of the support membrane were measured after formation into a forward osmosis membrane. The measurement results for the support membrane alone were also confirmed to be the same, within the margin of error.

[Purified water permeability of hollow fiber support membrane]

The hollow fiber support membrane was cut to an effective length of 10 cm, purified water at a temperature of 25°C was injected from one end while allowing air to escape from the other end, and the film was then sealed. An average pressure of 100 kPa (1 bar) was applied to the inner sides of the hollow fiber for 10 minutes for internal pressure filtration, the filtration amount was measured, and the purified water permeability per unit time and per unit area of the inner surface of the support membrane was calculated. The hollow fibers were handled so as to avoid reaching a completely dried state, with the pores of the hollow fibers being wetted beforehand using a 90 mass% aqueous ethanol solution and then washed with water before measurement. The purified water permeability was calculated using single threads from the hollow fiber support membrane (n = 5), taking the average value as the measured value.

[Compressive strength of hollow fiber support membrane]

The hollow fiber support membrane cut to an effective length of 10 cm was immersed in a pressurized container filled with purified water at 40°C. One end of the hollow fiber support membrane was sealed in that state while the other end was connected to a nozzle running out of the container, via a syringe needle. The pressurized container was sealed and water pressure was applied. The pressurization pressure was maintained at 0.10 MPa for 30 seconds, during which time the amount of water (g) permeating to the inner sides of the hollow fibers was measured, and the water permeability was calculated. This procedure was repeated while raising the pressurization pressure in increments of 0.05 MPa, and the pressure at which the water permeability began to decrease was recorded. The compressive strength was calculated using single threads from the hollow fiber support membrane (n = 2), taking the average value as the measured value.

[Example 1]

[Fabrication of hollow fiber support membrane]

A homogeneous polymer solution comprising 19 mass% polysulfone (Udel-P3500 by Solvay Specialty polymers), 61 mass% N-methyl-2-pyrrolidone (FujiFilm-Wako Pure Chemical Industries) and 20 mass% tetraethylene glycol (Tokyo Chemical Industry Co., Ltd.) was prepared as a spinning stock solution. The stock solution was filled into a wet hollow fiber spinning machine equipped with a dual spinneret. The stock solution at 40°C and an internal coagulating solution (water) at 25°C were discharged from the dual spinneret, and after conveying 250 mm in air controlled to 30°C with a relative humidity of 98%, it was coagulated with a coagulating bath (external coagulating solution) filled with water at 30°C, and a free roll was used as the turn roll for wind-up at a tensile force of 30 g to obtain a hollow fiber support membrane.

The outer diameter of the obtained hollow fiber support membrane was 1.02 mm, the inner diameter was 0.62 mm, the film thickness was 0.20 mm, the purified water permeability of the support membrane was 425 kg/(m$^2$ × hr × bar), and the compressive strength was 0.79 MPa. The spinning stability was satisfactory and no significant variation was seen in the inner or outer diameter of the hollow fiber membrane.

[Fabrication of support membrane module]

After cutting 130 hollow fiber support membranes to 120 mm, they were packed into a cylindrical plastic housing with a 20 mm diameter and 100 mm length, both ends were cut after anchoring with an adhesive, leaving the end faces open, and headers were fitted to fabricate a support membrane module with an effective length of 80 mm and an effective membrane inner surface area of 0.02 m$^2$, having the construction shown in Fig. 1.

[Formation of separation functional layer]

An aqueous solution containing 2.0 mass% *m*-phenylenediamine and 0.15 mass% sodium lauryl sulfate (first solution) was passed through the inner surface sides of the hollow fiber support membranes in the support membrane module for 20 minutes. After completion of the flow passage, and natural drainage of the first solution through the conduit at the bottom of the module, the outer side of the support membrane module was depressurized to 90 kPaG (11 kPaA) while the insides of the hollow fibers were wetted with the first solution, and the pressure reduction was maintained for 1 minute. Air was then streamed inside the hollow fibers for 1 minute at a linear speed of 210 cm/sec to remove the excess first solution. Next, an n-hexane solution (second solution) containing 0.20 mass% trimesoyl chloride was passed through the insides of the hollow fibers for 2 minutes for interfacial polymerization, to form a separation functional layer on the inner surfaces of the hollow fibers. The excess second solution was then removed with a nitrogen gas stream, and hot water at 85°C was flowed through the insides of the hollow fibers for 30 minutes at a linear speed of 5 cm/sec.

The module was then placed in an autoclave (AC, SX-500 by Tomy Seiko Co., Ltd.) with both ends of the hollow fiber support membranes open, and high-temperature steam at 121°C was circulated through the inside of the autoclave for 20 minutes for curing. The insides of the hollow fiber support membranes were washed with water at 20°C for 30 minutes to obtain a forward osmosis membrane module.

[Evaluation]

The obtained forward osmosis membrane module was used for evaluation. Fig. 2 and Fig. 3 show cross-sectional images of an observation sample prepared from the center section in the lengthwise direction of a hollow fiber forward osmosis membrane sampled from the middle part in the radial direction of the obtained forward osmosis membrane module.

[Example 2]

A forward osmosis membrane module was fabricated in the same manner as Example 1, except that for fabrication of the hollow fiber support membrane, a solution comprising 98 mass% water and 2 mass% tetraethylene glycol was used as the internal coagulating solution, and the temperature of the internal coagulating solution was 30°C.

The obtained forward osmosis membrane module was used for evaluation.

[Example 3]

A forward osmosis membrane module was fabricated in the same manner as Example 1, except that for fabrication of the hollow fiber support membrane, a homogeneous polymer solution comprising 19.2 mass% polysulfone (Udel-P3500 by Solvay Specialty Polymers), 60.5 mass% N-methyl-2-pyrrolidone (FujiFilm-Wako Pure Chemical Industries) and 20 mass% tetraethylene glycol (Tokyo Chemical Industry Co., Ltd.) was used as the spinning stock solution, and the temperature of the internal coagulating solution was 20°C.

The obtained forward osmosis membrane module was used for evaluation.

[Example 4]

A forward osmosis membrane module was fabricated in the same manner as Example 1, except that for fabrication of the hollow fiber support membrane, a homogeneous polymer solution comprising 19 mass% polyethersulfone (Ultrason E2020P by BASF), 61 mass% N-methyl-2-pyrrolidone (FujiFilm-Wako Pure Chemical Industries) and 20 mass% tetraethylene glycol (Tokyo Chemical Industry Co., Ltd.) was used as the spinning stock solution, a solution comprising 95 mass% water and 5 mass% tetraethylene glycol was used as the internal coagulating solution, and the temperature of the internal coagulating solution was 35°C.

The obtained forward osmosis membrane module was used for evaluation.

[Example 5]

A forward osmosis membrane was fabricated in the same manner as Example 1, except that for fabrication of the hollow fiber support membrane, the temperature of the internal coagulating solution was 40°C and the temperature of the external coagulating solution was 35°C, and the separation functional layer was formed on the outer sides of the hollow fibers.

For this Example, the measurements and evaluations were conducted with appropriate changes to the measurement location and direction of pressure application, considering that the separation functional layer was located on the outer sides of the hollow fiber support membranes.

[Example 6]

[Fabrication of flat support membrane]

A homogeneous polymer solution was prepared comprising 19 mass% polysulfone (Udel-P3500 by Solvay Specialty polymers), 61 mass% N-methyl-2-pyrrolidone (FujiFilm-Wako Pure Chemical Industries) and 20 mass% tetraethylene glycol (Tokyo Chemical Industry Co., Ltd.). The solution was adjusted to 40°C, a doctor blade was used for casting onto a glass plate to a thickness of 250 $\mu$m, and the plate was rapidly immersed in a coagulating bath filled with 10°C water for coagulation for 5 minutes, to fabricate a flat support membrane.

The film thickness of the obtained support membrane was 0.20 mm.

[Formation of separation functional layer]

An aqueous solution containing 2.0 mass% *m*-phenylenediamine and 0.15 mass% sodium lauryl sulfate (first solution) was dropped over the entire surface of the flat support membrane (the surface not in contact with the glass plate), and allowed to stand for 20 minutes. Air was then streamed over the surface coated with the first solution for 1 minute at a linear speed of 210 cm/sec, in the direction horizontal to the surface of the support membrane, to remove the excess first solution. Next, an n-hexane solution comprising 0.20 mass% trimesoyl chloride (second solution) was dropped over the entire surface on the first solution-coated side and allowed to stand for 2 minutes for interfacial polymerization, thereby forming a separation functional layer on the porous support.

Nitrogen gas was then streamed over the separation functional layer-formed surface to remove the excess second solution, and hot water at 85°C was flowed over the separation functional layer-formed surface for 30 minutes at a linear speed of 5 cm/sec.

The flat membrane over which the hot water was flowed was placed in an autoclave (SX-500 by Tomy Seiko Co., Ltd.), and high-temperature steam at 121°C was circulated through the inside of the autoclave for 20 minutes. The flat membrane was washed with water at 20°C for 30 minutes to obtain a flat forward osmosis membrane.

[Fabrication of flat membrane cell]

The obtained flat forward osmosis membrane was cut to a 140 mm × 140 mm rectangular shape, and the flat forward osmosis membrane was set in a rectangular-shaped housing with a length of 200 mm, a width of 200 mm and a thickness of 300 mm to fabricate a flat membrane cell.

[Evaluation]

The obtained flat membrane cell was used for evaluation.

In a flat membrane, the location of the dense layer of the support membrane and the location of the separation functional layer appear on the front and back of the membrane. The back in this case is the side in contact with the glass plate during fabrication of the support membrane, while the front is the side opposite from the back.

[Example 7]

A forward osmosis membrane module was fabricated in the same manner as Example 1, except that in [Formation of separation functional layer], the pressure reduction on the outside of the support membrane module after removing the first solution was changed to 10 kPaG (91 kPaA) and the air streaming time after depressurization was changed to 5 minutes.

The obtained forward osmosis membrane module was used for evaluation.

[Example 8]

A forward osmosis membrane module was fabricated in the same manner as Example 1, except that in [Formation of separation functional layer], the separation functional layer was formed on the inner surface of the hollow fiber support membrane, and after streaming nitrogen gas to remove the excess second solution, it was placed in a dryer at 50°C for 5 minutes and further washed with 20°C water for 30 minutes.
The obtained forward osmosis membrane module was used for evaluation.

[Example 9]

A forward osmosis membrane module was fabricated in the same manner as Example 1, except that in [Fabrication of hollow fiber support membrane], a homogeneous polymer solution comprising 21 mass% polysulfone (Udel-P3500 by Solvay Specialty Polymers), 59 mass% N-methyl-2-pyrrolidone (FujiFilm-Wako Pure Chemical Industries) and 20 mass% tetraethylene glycol (Tokyo Chemical Industry Co., Ltd.) was used as the spinning stock solution, and the temperature of the internal coagulating solution was 15°C.
The obtained forward osmosis membrane module was used for evaluation.

[Comparative Example 1]

[Fabrication of hollow fiber support membrane]

A homogeneous polymer solution comprising 18 mass% of terminal-hydroxylated polyethersulfone (Ultrason E2020PSR by BASF), 57 mass% N,N-dimethyl acetamide (FujiFilm-Wako Pure Chemical Industries) and 25 mass% tetraethylene glycol (Tokyo Chemical Industry Co., Ltd.) was prepared as a spinning stock solution. The stock solution was filled into a wet hollow fiber spinning machine equipped with a dual spinneret. The stock solution at 40°C and an internal coagulating solution (water) at 45°C were discharged from the dual spinneret, and after conveying 200 mm in air controlled to 30°C with a relative humidity of 98%, it was coagulated with a coagulating bath (external coagulating solution) filled with water at 50°C, and a free roll was used as the turn roll for take-up at a tensile force of 10 g, to obtain a hollow fiber support membrane. The internal coagulating solution used was a solution comprising 50 mass% water and 50 mass% tetraethylene glycol.
The outer diameter of the obtained hollow fiber support membrane was 1.00 mm, the inner diameter was 0.70 mm, the film thickness was 0.15 mm, the purified water permeability of the support membrane was 1,850 kg/(m$^2$ × hr × bar), and the compressive strength was 0.43 MPa.

[Fabrication of support membrane module] and [Formation of separation functional layer]

A forward osmosis membrane module was fabricated in the same manner as Example 1, except for using the hollow fiber support membrane described above.

[Evaluation]

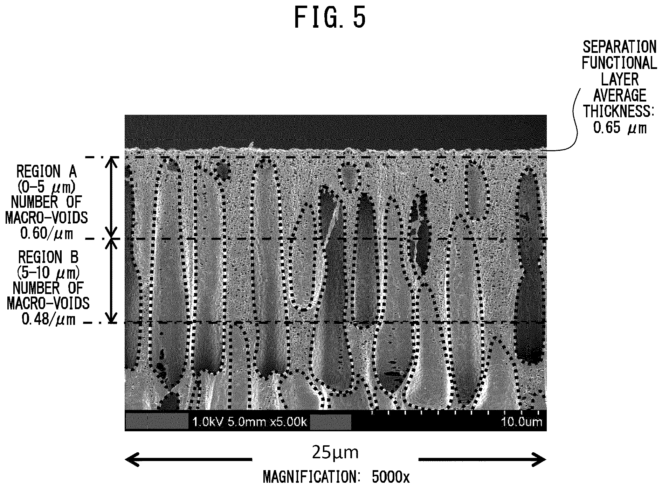

The obtained forward osmosis membrane module was used for evaluation. Fig. 4 and Fig. 5 show cross-sectional images of an observation sample prepared from the center section in the lengthwise direction of a hollow fiber forward osmosis membrane sampled from the middle part in the radial direction of the obtained forward osmosis membrane module. Fig. 4 is an electron microscope image, and Fig. 5 is an image with auxiliary lines added to Fig. 4. In the forward osmosis membrane of Comparative Example 1, the thickness of the dense layer was thin at 0.2 μm, making it almost impossible to identify the dense layer in the cross-sectional images of Fig. 4 and Fig. 5. In the cross-sectional image of Fig. 5, the macro-void ratio in region A is indicated as "0.60/μm", which does not match the "0.61/μm" for the macro-void ratio in region Alisted in Table 1. This is because the numerical value in Fig. 5 is the value obtained from a single cross-sectional image, whereas the numerical value in Table 1 is the average value for 9 visual fields.

[Comparative Example 2]

A forward osmosis membrane module was fabricated in the same manner as Example 1, except that in [Fabrication of support membrane module], the temperature of the internal coagulating solution was 37°C.
The obtained forward osmosis membrane module was used for evaluation.

[Comparative Example 3]

A forward osmosis membrane module was fabricated in the same manner as Example 9, except that in [Fabrication of support membrane module], the temperature of the internal coagulating solution was 5°C.

The obtained forward osmosis membrane module was used for evaluation.

[Comparative Example 4]

A forward osmosis membrane module was fabricated by forming a separation functional layer on the inner surface of a hollow fiber support membrane in the same manner as Example 8, except that the hollow fiber support membrane module used was obtained in the same manner as Comparative Example 1.

The obtained forward osmosis membrane module was used for evaluation.

[Comparative Example 5]

[Fabrication of flat support membrane] and [Formation of separation functional layer]

A homogeneous polymer solution was prepared comprising 20 mass% polysulfone (Udel-P3500 by Solvay Specialty Polymers) and 80 mass% N,N-dimethylformamide (FujiFilm-Wako Pure Chemical Industries). The solution was adjusted to 40°C and a doctor blade was used for casting onto a glass plate to a thickness of 250 $\mu$m, after which the plate was rapidly immersed in a coagulating bath filled with 40°C water for coagulation for 5 minutes, to fabricate a flat support membrane. The film thickness of the obtained support membrane was 0.20 mm. The dense layer of the fabricated support membrane was greater than 15 $\mu$m.

A flat membrane cell including flat forward osmosis membranes was fabricated in the same manner as Example 6, except for using the obtained hollow fiber support membranes.

[Evaluation]

The obtained flat membrane cell was used for evaluation.

[Reference Example 1 to 4]

A hollow fiber support membrane was fabricated in the same manner as Example 1, except that in [Fabrication of hollow fiber support membrane], the conditions for take-up after spinning and coagulation of the spinning stock solution were changed as shown in Table 1, and its physical properties were evaluated.

In Reference Example 2, the physical properties of the hollow fibers obtained by spinning were highly variable and unstable depending on the location, and the spinning stability was unsatisfactory.

The results are shown in Tables 1 to 3.

[Table 1]

Table 1. Support membrane fabrication conditions and physical properties

| | Spinning stock solution | | | | | | | | Internal coagulating solution | | | | | Coagulating bath | |
| | Polymer | | Solvent | | Additive | | Temperature [°C] | Solvent | Additive | | | Temperature [°C] | Solvent | Temperature [°C] |
| | Type | Concentration [wt%] | Type | Concentration [wt%] | Type | Concentration [wt%] | | | Type | Concentration [wt%] | | | | |
|---|---|---|---|---|---|---|---|---|---|---|---|---|---|---|
| Example 1 | PSf | 19.0 | NMP | 61.0 | TEG | 20 | 40 | Water | None | 0 | 25 | Water | 30 |
| Example 2 | PSf | 19.0 | NMP | 61.0 | TEG | 20 | 40 | Water | TEG | 2 | 30 | Water | 30 |
| Example 3 | PSf | 19.2 | NMP | 60.8 | TEG | 20 | 40 | Water | None | 0 | 20 | Water | 30 |
| Example 4 | PES | 19.0 | NMP | 61.0 | TEG | 20 | 40 | Water | TEG | 5 | 35 | Water | 30 |
| Example 5 | PSf | 19.0 | NMP | 61.0 | TEG | 20 | 40 | Water | None | 0 | 40 | Water | 35 |
| Example 6 | PSf | 19.0 | NMP | 61.0 | TEG | 20 | 40 | - | - | - | - | Water | 10 |
| Example 7 | PSf | 19.0 | NMP | 61.0 | TEG | 20 | 40 | Water | None | 0 | 25 | Water | 30 |
| Example 8 | PSf | 19.0 | NMP | 61.0 | TEG | 20 | 40 | Water | TEG | 5 | 25 | Water | 30 |
| Example 9 | PSf | 21.0 | NMP | 59.0 | TEG | 20 | 40 | Water | None | 0 | 15 | Water | 30 |
| Comp. Example 1 | PES-OH | 18.0 | DMAc | 57.0 | TEG | 25 | 45 | Water | TEG | 50 | 45 | Water | 50 |
| Comp. Example 2 | PSf | 19.0 | NMP | 61.0 | TEG | 20 | 40 | Water | None | 0 | 37 | Water | 30 |
| Comp. Example 3 | PSf | 21.0 | NMP | 59.0 | TEG | 20 | 40 | Water | None | 0 | 5 | Water | 30 |
| Comp. Example 4 | PES-OH | 18.0 | DMAc | 57.0 | TEG | 25 | 45 | Water | TEG | 50 | 45 | Water | 50 |
| Comp. Example 5 | PSf | 20.0 | DMF | 80.0 | None | 0 | 40 | - | - | - | - | Water | 40 |
| Ref. Example 1 | PSf | 19.0 | NMP | 61.0 | TEG | 20 | 40 | Water | None | 0 | 25 | Water | 30 |
| Ref. Example 2 | PSf | 19.0 | NMP | 61.0 | TEG | 20 | 40 | Water | None | 0 | 25 | Water | 30 |

| Table 1. Support membrane fabrication conditions and physical properties | | | | | | | | | | | | |
|---|---|---|---|---|---|---|---|---|---|---|---|---|
| | Spinning stock solution | | | | | | | Internal coagulating solution | | | | Coagulating bath |
| | Polymer | | Solvent | | Additive | | Temperature [°C] | Solvent | Additive | | Temperature [°C] | Solvent | Temperature [°C] |
| | Type | Concentration [wt%] | Type | Concentration [wt%] | Type | Concentration [wt%] | | | Type | Concentration [wt%] | | | |
| Ref. Example 3 | PSf | 19.0 | NMP | 61.0 | TEG | 20 | 40 | Water | None | 0 | 25 | Water | 30 |
| Ref. Example 4 | PSf | 19.0 | NMP | 61.0 | TEG | 20 | 40 | Water | None | 0 | 25 | Water | 30 |

[Table 2]

| Table 1. Support membrane fabrication conditions and physical properties (cont.) | | | | | | | | | |
|---|---|---|---|---|---|---|---|---|---|
| | Take-up | | | Spinning stability | Size | | | Physical properties | |
| | Turn roll | Tensile force [g] | Take-up speed [m/min] | | Outer diameter [mm] | Inner diameter [mm] | Film thickness [$\mu$m] | Purified water permeability [LMH/bar] | Compressive strength [MPa] |
| Example 1 | Free roll | 30 | 20 | Good | 1.02 | 0.62 | 200 | 425 | 0.79 |
| Example 2 | Free roll | 30 | 20 | Good | 1.02 | 0.62 | 200 | 425 | 0.79 |
| Example 3 | Free roll | 30 | 20 | Good | 1.02 | 0.62 | 200 | 425 | 0.79 |
| Example 4 | Free roll | 30 | 20 | Good | 1.02 | 0.62 | 200 | 500 | 0.79 |
| Example 5 | Free roll | 30 | 20 | Good | 1.02 | 0.62 | 200 | 500 | 0.79 |
| Example 6 | - | - | - | - | - | - | 200 | 300 | - |
| Example 7 | Free roll | 30 | 20 | Good | 1.02 | 0.62 | 200 | 425 | 0.79 |
| Example 8 | Free roll | 30 | 20 | Good | 1.02 | 0.62 | 200 | 425 | 0.79 |
| Example 9 | Free roll | 30 | 20 | Good | 1.02 | 0.62 | 200 | 410 | 0.79 |
| Comp. Example 1 | Free roll | 10 | 20 | Good | 1.00 | 0.70 | 150 | 1850 | 0.43 |
| Comp. Example 2 | Free roll | 30 | 20 | Good | 1.02 | 0.62 | 200 | 500 | 0.79 |
| Comp. Example 3 | Free roll | 30 | 20 | Good | 1.02 | 0.62 | 200 | 400 | 0.79 |
| Comp. Example 4 | Free roll | 10 | 20 | Good | 1.00 | 0.70 | 150 | 1850 | 0.43 |
| Comp. Example 5 | - | - | - | - | - | - | 200 | 100 | - |
| Ref. Example 1 | Fixed roll | 40 | 20 | Good | 1.02 | 0.62 | 200 | 350 | 0.20 |
| Ref. Example 2 | None | 3 | 20 | Poor | Large variation | Large variation | Large variation | Large variation | Large variation |

(continued)

Table 1. Support membrane fabrication conditions and physical properties (cont.)

| | Take-up | | | Spinning stability | Size | | | Physical properties | |
|---|---|---|---|---|---|---|---|---|---|
| | Turn roll | Tensile force [g] | Take-up speed [m/min] | | Outer diameter [mm] | Inner diameter [mm] | Film thickness [μm] | Purified water permeability [LMH/bar] | Compressive strength [MPa] |
| Ref. Example 3 | Free roll, 2-stage | 35 | 20 | Good | 1.02 | 0.62 | 200 | 425 | 0.79 |
| Ref. Example 4 | Free roll | 10 | 10 | Good | 1.02 | 0.62 | 200 | 400 | 0.79 |

The abbreviations used in the spinning stock solution column of Table 1 represent the following.

PSf: Polysulfone

PES: Polyethersulfone

PES-OH: Terminal hydroxylated polyethersulfone

NMP: N-Methyl-2-pyrrolidone

DMAc: N,N-Dimethyl acetamide

DMF: N,N-Dimethylformamide

TEG: Tetraethylene glycol

[Table 3]

| | | Support membrane | | | | | Separation functional layer | | | | |
|---|---|---|---|---|---|---|---|---|---|---|---|
| Table 2. Forward osmosis membrane module | | | | | | | | | | | |
| | Form | Dense layer | | Macro-void ratio [number/$\mu$m] | | Location | Thickness [$\mu$m] | Coefficient of variation in thickness [%] | Curing | | |
| | | Location | Thickness [$\mu$m] | Region A | Region B | | | | Method | Temperature | |
| Example 1 | Hollow fiber | Inside | 4.7 | 0.04 | 0.12 | Inside | 0.58 | 26 | AC | 121 | |
| Example 2 | Hollow fiber | Inside | 3.5 | 0.09 | 0.17 | Inside | 0.61 | 29 | AC | 121 | |
| Example 3 | Hollow fiber | Inside | 5.1 | 0.02 | 0.19 | Inside | 0.54 | 18 | AC | 121 | |
| Example 4 | Hollow fiber | Inside | 2.0 | 0.14 | 0.29 | Inside | 0.78 | 32 | AC | 121 | |
| Example 5 | Hollow fiber | Outside | 1.7 | 0.17 | 0.38 | Outside | 0.71 | 52 | AC | 121 | |
| Example 6 | Flat membrane | Front | 9.4 | 0.00 | 0.06 | Front | 0.67 | 41 | AC | 121 | |
| Example 7 | Hollow fiber | Inside | 4.7 | 0.04 | 0.12 | Inside | 0.79 | 63 | AC | 121 | |
| Example 8 | Hollow fiber | Inside | 4.7 | 0.04 | 0.12 | Inside | 0.84 | 34 | Drying | 50 | |
| Example 9 | Hollow fiber | Inside | 6.5 | 0.01 | 0.08 | Inside | 0.53 | 25 | AC | 121 | |
| Comp. Example 1 | Hollow fiber | Inside | 0.2 | 0.61 | 0.48 | Inside | 0.65 | 31 | AC | 121 | |
| Comp. Example 2 | Hollow fiber | Inside | 0.9 | 0.28 | 0.43 | Inside | 0.73 | 38 | AC | 121 | |

| Table 2. Forward osmosis membrane module | | | | | | | | | | | |
|---|---|---|---|---|---|---|---|---|---|---|---|
| | Support membrane | | | | | Separation functional layer | | | | | |
| | Form | Dense layer | | Macro-void ratio [number/$\mu$m] | | Location | Thickness [$\mu$m] | Coefficient of variation in thickness [%] | Curing | | |
| | | Location | Thickness [$\mu$m] | Region A | Region B | | | | Method | Temperature | |
| Comp. Example 3 | Hollow fiber | Inside | 10.6 | 0.00 | 0.02 | Inside | 0.51 | 22 | AC | 121 | |
| Comp. Example 4 | Hollow fiber | Inside | 0.2 | 0.61 | 0.48 | Inside | 0.88 | 37 | Drying | 50 | |
| Comp. Example 5 | Flat membrane | Front | >15.0 | 0.00 | 0.00 | Front | 0.48 | 45 | AC | 121 | |

[Table 4]

| Table 3. Evaluation results | | | | | | | | | | | |
|---|---|---|---|---|---|---|---|---|---|---|---|
| | Support membrane | | | | Forward osmosis evaluation | | | | | | |
| | Dense layer | | Macro-void ratio [number/$\mu$m] | | Water permeability (flux) [kg/m$^2$/hr] | Reverse salt diffusion (RSF) [g/m$^2$/hr] | Salt permeability (RSF/Flux) [g/kg] | | | Performance maintenance rate [%] | |
| | Location | Thickness [$\mu$m] | Region A | Region B | | | 20 kPa (reference) | After 100 kPa | After 200 kPa | After 100 kPa | After 200 kPa |
| Example 1 | Inside | 4.7 | 0.04 | 0.12 | 7.2 | 0.18 | 0.025 | 0.034 | 0.049 | 74 | 51 |
| Example 2 | Inside | 3.5 | 0.09 | 0.17 | 8.0 | 0.25 | 0.031 | 0.050 | 0.072 | 63 | 43 |
| Example 3 | Inside | 5.1 | 0.02 | 0.19 | 7.0 | 0.15 | 0.021 | 0.022 | 0.038 | 97 | 56 |
| Example 4 | Inside | 2.0 | 0.14 | 0.29 | 8.2 | 0.31 | 0.038 | 0.067 | 0.089 | 56 | 42 |
| Example 5 | Outside | 1.7 | 0.17 | 0.38 | 8.4 | 0.35 | 0.042 | 0.077 | 0.111 | 54 | 38 |
| Example 6 | Front | 9.8 | 0.00 | 0.06 | 2.8 | 0.14 | 0.050 | 0.063 | 0.094 | 79 | 53 |
| Example 7 | Inside | 4.7 | 0.04 | 0.12 | 7.5 | 0.31 | 0.041 | 0.064 | 0.092 | 65 | 45 |
| Example 8 | Inside | 4.7 | 0.04 | 0.12 | 8.9 | 1.38 | 0.155 | 0.160 | 0.183 | 97 | 85 |
| Example 9 | Inside | 6.5 | 0.01 | 0.08 | 4.1 | 0.10 | 0.024 | 0.026 | 0.045 | 94 | 54 |
| Comp. Example 1 | Inside | 0.2 | 0.61 | 0.48 | 9.2 | 0.18 | 0.020 | 0.171 | 0.321 | 11 | 6 |
| Comp. Example 2 | Inside | 0.9 | 0.28 | 0.43 | 8.8 | 0.32 | 0.036 | 0.119 | 0.277 | 31 | 13 |
| Comp. Example 3 | Inside | 10.6 | 0.00 | 0.02 | 1.5 | 0.08 | 0.053 | 0.068 | 0.102 | 78 | 52 |
| Comp. Example 4 | Inside | 0.2 | 0.61 | 0.48 | 12.0 | 1.83 | 0.153 | 0.320 | 0.462 | 48 | 33 |
| Comp. Example 5 | Front | >15.0 | 0.00 | 0.00 | 0.8 | 0.11 | 0.138 | 0.155 | 0.263 | 89 | 52 |

EP 4 364 826 A1

38

Referring to Tables 1 to 3, the forward osmosis membrane modules of Examples 1 to 9 had high water permeability of the forward osmosis membranes, and maintained low salt permeability (RSF/flux) values even after a transmembrane pressure difference history of positive pressure on the support membrane side (draw solution side). This confirmed that the forward osmosis membranes in the modules of Examples 1 to 9 were practical forward osmosis membranes with high performance as forward osmosis membranes and high physical durability.

In contrast, the forward osmosis membrane modules of Comparative Examples 1 and 4 had high forward osmosis performance with a low transmembrane pressure difference that was positive on the support membrane side (draw solution side), but the performance was notably lowered after a history with a high transmembrane pressure difference. Specifically, the forward osmosis membrane module of Comparative Example 1 had a notably lower performance maintenance rate, while the forward osmosis membrane module of Comparative Example 4 had a much larger salt permeability (RSF/flux) value. This was attributed to the especially large macro-void ratio in region A and the small dense layer thickness. This was believed to be because the condition at the interface between the separation functional layer and support membrane was unstable, with some sections having low adhesiveness between the separation functional layer and support membrane, making it unable to withstand pressure in the direction detaching the separation functional layer from the support membrane, and causing irreversible alterations.

The forward osmosis membrane of Comparative Example 2 had a suitable macro-void ratio in region B, but the macro-void ratio in region A was high, and the dense layer thickness was also small. Consequently, the performance of the forward osmosis membrane was slightly lower than Examples 1 to 3, even with a low transmembrane pressure difference that was positive on the support membrane side (draw solution side). After having experienced a history with a high transmembrane pressure difference, the performance was significantly lowered and the performance maintenance rate was also lower. The slightly lowered performance with a small transmembrane pressure difference was attributed to the fact that the supply balance of the monomers during interfacial polymerization was disrupted due to an unsuitable number of macro-voids in the support membrane, resulting in lower separation performance of the formed separation functional layer. The lower performance maintenance rate after application of a highpressure transmembrane pressure difference was attributed to the thin small dense layer and the presence of macro-voids near the front side, resulting in sections with low adhesiveness between the separation functional layer and support membrane.

In the forward osmosis membranes of Comparative Examples 3 and 5, macro-voids were virtually absent in region A and region B of the support membrane. The obtained forward osmosis membrane therefore exhibited low performance as a forward osmosis membrane with a low transmembrane pressure difference, despite having physical durability. This is thought to be due to the increased density of the support membrane, which caused markedly lower diffusibility of the draw solution and reduced water permeability of the forward osmosis membrane, resulting in a greater effect of free diffusion of salts.

It was thus shown that in order to obtain a practical forward osmosis membrane exhibiting both physical durability and performance as a forward osmosis membrane, it is important to control the structure of the porous support in the support membrane, and to control the method of forming the separation functional layer.

REFERENCE SIGNS LIST

1 Hollow fiber membrane module
2, 3 Outer conduit
4 Hollow fiber membrane
5, 6 Adhesive-anchored section
7, 8 Header
9, 10 Inner conduit

**Claims**

1. A forward osmosis membrane composed of a support membrane and a separation functional layer, wherein:

the support membrane comprises at least a porous support,
the separation functional layer is provided on the porous support,
the porous support comprises a dense layer and a macro-void layer in that order from the side contacting with the separation functional layer, in the depthwise direction,
the macro-void layer is a layer having macro-voids with long diameters of 1.0 $\mu$m or greater,
the dense layer is a layer lacking macro-voids,

the thickness of the dense layer is 1.0 to 9.5 μm, and
the macro-voids:

are present at 0 to 0.20/μm in region A which extends from the interface between the separation functional layer and the porous support up to a depth of 0 to 5.0 μm, and
are present at 0.04 to 0.40/μm in region B which extends from the interface between the separation functional layer and the porous support up to a depth of 5.0 to 10.0 μm.

2. The forward osmosis membrane according to claim 1, wherein the macro-voids are present at 0 to 0.16/μm in region A.

3. The forward osmosis membrane according to claim 1, wherein the macro-voids are present at 0.06 to 0.30/μm in region B.

4. The forward osmosis membrane according to claim 2, wherein the macro-voids are present at 0 to 0.12/μm in region A.

5. The forward osmosis membrane according to claim 3, wherein the macro-voids are present at 0.08 to 0.20/μm in region B.

6. The forward osmosis membrane according to any one of claims 1 to 5, wherein the number of macro-voids present in region B is equal to or greater than the number of macro-voids present in region A.

7. The forward osmosis membrane according to any one of claims 1 to 5, wherein the support membrane of the forward osmosis membrane consists entirely of the porous support.

8. The forward osmosis membrane according to any one of claims 1 to 5, wherein the thickness of the dense layer is 8.0 μm or lower.

9. The forward osmosis membrane according to claim 8, wherein the thickness of the dense layer is 1.5 to 6.0 μm.

10. The forward osmosis membrane according to any one of claims 1 to 5, wherein the support membrane is a hollow fiber support membrane.

11. The forward osmosis membrane according to claim 10, wherein the hollow fiber support membrane has the dense layer on at least the inner surfaces of the hollow fibers.

12. The forward osmosis membrane according to any one of claims 1 to 5, wherein the coefficient of variation in the average thickness of the separation functional layer of the forward osmosis membrane is 60% or lower.

13. The forward osmosis membrane according to any one of claims 1 to 5, wherein the coefficient of variation in the average thickness of the separation functional layer of the forward osmosis membrane is 30% or lower.

14. The forward osmosis membrane according to any one of claims 1 to 5, wherein the porous support includes one or more compounds selected from among polysulfone, polyethersulfone, and their derivatives.

15. The forward osmosis membrane according to any one of claims 1 to 5, wherein the porous support includes polysulfone.

16. A forward osmosis membrane module comprising a forward osmosis membrane according to any one of claims 1 to 5 housed in a housing.

17. A hollow fiber membrane comprising at least a porous support, wherein:

the porous support comprises a dense layer and a macro-void layer in that order from the outer surface or inner surface in the thickness direction of the membrane wall,
the macro-void layer is a layer having macro-voids with long diameters of 1.0 μm or greater,
the dense layer is a layer lacking macro-voids,
the thickness of the dense layer is 1.0 to 9.5 μm, and
the macro-voids:

are present at 0 to 0.20/$\mu$m in region A which extends from the outer surface or inner surface of the porous support up to a depth of 0 to 5.0 $\mu$m, and

are present at 0.04 to 0.40/$\mu$m in region B which extends from the outer surface or inner surface of the porous support up to a depth of 5.0 to 10.0 $\mu$m.

18. The hollow fiber membrane according to claim 17, wherein the macro-voids are present at 0 to 0.16/$\mu$m in region A.

19. The hollow fiber membrane according to claim 17, wherein the macro-voids are present at 0.06 to 0.30/$\mu$m in region B.

20. The hollow fiber membrane according to claim 18, wherein the macro-voids are present at 0 to 0.12/$\mu$m in region A.

21. The hollow fiber membrane according to claim 19, wherein the number of macro-voids present in region B is equal to or greater than the number of macro-voids present in region A.

22. The hollow fiber membrane according to any one of claims 17 to 21, wherein the hollow fiber membrane consists entirely of the porous support.

23. The hollow fiber membrane according to any one of claims 17 to 21, wherein the thickness of the dense layer is 8.0 $\mu$m or lower.

24. The hollow fiber membrane according to any one of claims 17 to 21, wherein the thickness of the dense layer is 1.5 to 6.0 $\mu$m.

25. The hollow fiber membrane according to any one of claims 17 to 21, wherein the hollow fiber membrane has the dense layer on at least the inner surfaces of the hollow fibers.

26. The hollow fiber membrane according to any one of claims 17 to 21, wherein the porous support includes one or more compounds selected from among polysulfone, polyethersulfone, and their derivatives.

27. The hollow fiber membrane according to any one of claims 17 to 21, wherein the porous support includes polysulfone.

28. The hollow fiber membrane according to any one of claims 17 to 21, wherein the hollow fiber membrane is used as the support membrane of a forward osmosis membrane.

29. A hollow fiber membrane module comprising a hollow fiber membrane according to any one of claims 17 to 21 housed in a housing.

30. A method for producing a hollow fiber membrane which includes:

discharging a spinning stock solution from an external fluid channel of a double-tube nozzle, and an internal coagulating solution from an internal fluid channel of a double-tube nozzle;
immersing and coagulating the spinning stock solution discharged from the external fluid channel of a double-tube nozzle in the external coagulating bath through a free-running section; and
taking up the spinning stock solution while applying tension to the coagulated spinning stock solution,

wherein the spinning stock solution includes a resin (polymer) and a solvent, and
the temperature of the spinning stock solution discharged from the double-tube nozzle is higher than the temperature of the internal coagulating solution, the temperature difference between the two solutions being 5°C or higher and lower than 35°C.

31. The method according to claim 30, wherein the tension is 4 g or greater and 60 g or lower.

32. The method according to claim 30 or 31, wherein the temperature of the free-running section is 15°C or higher and 60°C or lower.

33. The method according to claim 30 or 31, wherein the relative humidity of the free-running section is 40% or higher and 100% or lower.

# FIG. 1

# FIG. 2

1.0kV 5.0mm x5.00k          10.0um

# FIG. 3

SEPARATION
FUNCTIONAL
LAYER
AVERAGE
THICKNESS:
0.58 μm

REGION A
(0-5 μm)
NUMBER OF
MACRO-VOIDS
0.04/μm

DENSE
LAYER
THICKNESS:
4.7 μm

REGION B
(5-10 μm)
NUMBER OF
MACRO-VOIDS
0.12/μm

1.0kV 5.0mm x5.00k                    10.0um

25μm

MAGNIFICATION: 5000x

# FIG. 4

1.0kV 5.0mm x5.00k                    10.0um

# FIG. 5

SEPARATION
FUNCTIONAL
LAYER
AVERAGE
THICKNESS:
0.65 $\mu$m

REGION A
(0-5 $\mu$m)
NUMBER OF
MACRO-VOIDS
0.60/$\mu$m

REGION B
(5-10 $\mu$m)
NUMBER OF
MACRO-VOIDS
0.48/$\mu$m

1.0kV 5.0mm x5.00k          10.0um

25$\mu$m
MAGNIFICATION: 5000x

## INTERNATIONAL SEARCH REPORT

| International application No. |
|---|
| **PCT/JP2022/023487** |

**A. CLASSIFICATION OF SUBJECT MATTER**

*B01D 61/00*(2006.01)i; *B01D 63/02*(2006.01)i; *B01D 69/00*(2006.01)i; *B01D 69/08*(2006.01)i; *B01D 69/10*(2006.01)i; *B01D 69/12*(2006.01)i; *B01D 71/68*(2006.01)i

FI: B01D69/10; B01D69/12; B01D69/00; B01D69/08; B01D71/68; B01D63/02; B01D61/00 500

According to International Patent Classification (IPC) or to both national classification and IPC

**B. FIELDS SEARCHED**

Minimum documentation searched (classification system followed by classification symbols)

B01D61/00; B01D63/02; B01D69/00; B01D69/08; B01D69/10; B01D69/12; B01D71/68

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/155034 A1 (ASAHI KASEI KABUSHIKI KAISHA) 14 September 2017 (2017-09-14) claims, paragraphs [0053], [0076]-[0079], [0087]-[0110], [0160]-[0236] | 30-33 |
| A | | 1-29 |
| A | JP 2018-39003 A (TORAY INDUSTRIES, INC.) 15 March 2018 (2018-03-15) claims, paragraphs [0026]-[0035], [0091]-[0119], fig. 1 | 1-29 |
| A | JP 2020-54997 A (TORAY INDUSTRIES, INC.) 09 April 2020 (2020-04-09) claims, paragraphs [0031]-[0034], fig. 1 | 1-29 |
| A | WO 2015/041286 A1 (MITSUBISHI RAYON CO., LTD.) 26 March 2015 (2015-03-26) claims, paragraph [0062] | 1-29 |
| A | JP 2003-236351 A (MITSUBISHI RAYON CO., LTD.) 26 August 2003 (2003-08-26) claims, paragraphs [0009], [0018], [0019] | 1-29 |
| A | JP 2002-143654 A (KURARAY CO., LTD.) 21 May 2002 (2002-05-21) claims, paragraph [0009] | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/023487**

| Patent document cited in search report | | | Publication date (day/month/year) | Patent family member(s) | | | Publication date (day/month/year) |
|---|---|---|---|---|---|---|---|
| WO | 2017/155034 | A1 | 14 September 2017 | US | 2019/0076790 | A1 | |
| | | | | claims, paragraphs [0060], [0085]-[0088], [0096]-[0119], [0196]-[0272] | | | |
| | | | | EP | 3427817 | A1 | |
| | | | | CN | 109070010 | A | |
| JP | 2018-39003 | A | 15 March 2018 | (Family: none) | | | |
| JP | 2020-54997 | A | 09 April 2020 | (Family: none) | | | |
| WO | 2015/041286 | A1 | 26 March 2015 | JP | 2016-196004 | A | |
| | | | | KR | 10-2016-0044582 | A | |
| | | | | CN | 105722585 | A | |
| JP | 2003-236351 | A | 26 August 2003 | (Family: none) | | | |
| JP | 2002-143654 | A | 21 May 2002 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020059769 A
- JP 2018039003 A
- JP 2019093366 A
- JP 2011194272 A
- JP 2013022588 A